# EUROPEAN PATENT APPLICATION

(11) **EP 3 379 704 A1**
(43) Date of publication of application: **26.09.2018**
(21) Application number: 16865956.3
(22) Date of filing: 11.05.2016
(51) Int. Cl.: H02K 15/04

(54) **COIL FORMING DEVICE AND COIL FORMING METHOD**

(30) Priority: 17.11.2015 JP 2015224427
(71) Applicant: Mitsubishi Electric Corporation, Chiyoda-ku Tokyo 100-8310 (JP)
(72) Inventor: MOTOISHI, Naohiro, Tokyo 100-8310 (JP); KAWAMURA, Koji, Tokyo 100-8310 (JP); MASUDA, Takatoshi, Tokyo 100-8310 (JP); TAKIZAWA, Yuji, Tokyo 100-8310 (JP)
(74) Representative: Sajda, Wolf E.
(86) International application number: PCT/JP2016/064067
(87) International publication number: WO 2017/085953

(57) **Abstract**

A coil forming device (50) includes: a plurality of forming dies (1S to 4S) rotatable about a center of a curvature of an inner peripheral surface thereof as an axis (P) of a rotation shaft; a plurality of clamping dies (1C to 4C) rotatable about a center of a curvature of an inner peripheral surface thereof as the axis (P) of the rotation shaft; a drive mechanism (52) configured to rotationally drive the forming dies and the clamping dies; and a driving direction change mechanism (51) configured to change rotation directions of the forming dies (1S to 4S) and the clamping dies (1C to 4C). Each pair of the forming die and the clamping die holding a straight portion (61a1 to 61b2) of a plane-bent intermediate coil (6) from both sides in the circumferential direction have equal widths in the radial direction of the coil forming device (50), and the forming dies and the clamping dies holding a plurality of the straight portions (61a1 to 61b2) disposed from an inner peripheral side of the coil forming device (50) toward an outer peripheral side of the coil forming device (50) are disposed alternately in the circumferential direction with the straight portions (61a1 to 61b2) interposed therebetween.

## Description

### Technical Field

The present invention relates to a coil forming device and a coil forming method for forming a coil of a stator of a rotary electric machine, and particularly relates to a coil forming device and a coil forming method that contribute to improvement of the productivity in a process of forming a coil for distributed winding and improvement of the quality of the coil.

### Background Art

In recent years, rotary electric machines such as an electric motor and an electric generator need to be adapted to various applications, and improvement of the productivity and improvement of the quality thereof are desired. In particular, regarding a rotary electric machine using a distributed-winding coil, a step of mounting the coil to a stator core is complicated, and improvement of the assembling efficiency of the coil and a stator is desired.

As a stator that can improve workability of an assembling step of mounting a coil to a stator core, a stator has been proposed which is produced by: producing a coil body that is formed in a concentric-winding manner, that has, between adjacent conductive wires, a gap into which another conductive wire can be inserted, and that has lane change portions formed in coil end portions so as to cross the width of one conductive wire; and disposing a stator core in a coil cage formed by arranging a plurality of coil bodies in a circumferential direction (see, for example, Patent Document 1).

As a method for forming a distributed/lap-winding coil, a method for producing an intermediate formed coil has been proposed, and the method includes: an intermediate formed coil forming step of forming an intermediate formed coil by winding a coil on a winding frame; a crank forming step of forming lane change portions in coil end portions of the intermediate formed coil; and a circular arc forming step of bending the intermediate formed coil into a circular arc shape so as to match the shape of a stator core (see, for example, Patent Document 2).

### List of Citations

### Patent Documents

- Patent Document 1:: Japanese Laid-Open Patent Publication JP 2012-125 043 A (pages 8 to 10, FIGS. 3, 4, and 7)
- Patent Document 2:: Japanese Laid-Open Patent Publication JP 2014-209 834 A

### Summary of the Invention

### Problems to be Solved by the Invention

In a conventional coil forming method as in Patent Document 2, in forming a coil for distributed winding, a minimum unit of the coil is formed through: an intermediate coil forming step of forming an intermediate formed coil by winding a conductive wire on a winding frame; a crank forming step forming lane change portions in coil end portions of the intermediate coil; and a circular arc forming step of bending the intermediate coil into a circular arc shape so as to match the shape of a stator core.

At this time, a mutual positional relationship of each straight portion of slot-accommodated portions of the intermediate formed coil varies since each straight portion is initially formed in the intermediate coil forming step and then the crank forming step and the circular arc forming step are performed thereof. Accordingly, there is a problem that it is difficult to accurately form the coil into a desired shape and it is difficult to accurately assemble the stator core to a stator coil without applying stress to a conductive wire of the stator coil in inserting the stator core into the stator coil.

The present invention has been made to solve the above-described problem, and an object of the present invention is to provide a coil forming device and a coil forming method that have good coil formability and that causes no change in coil shape in inserting a stator core into a stator coil obtained by assembling a plurality of coils and thus can prevent damage of a film of a conductive wire.

### Solution to the Problems

A coil forming device according to the present invention is a coil forming device for unfolding a folded intermediate coil formed from one conductive wire, into a lap-winding coil capable of being mounted to two different slots of a stator core of a rotary electric machine including an annular yoke portion and a plurality of tooth portions projecting from the yoke portion to an inner side in a radial direction, wherein
the intermediate coil is folded through plane bending of the one conductive wire on a plane over an overall length thereof such that
both end portions of the conductive wire are directed in the same direction at a terminal side, four or more straight portions the number of which is an even number are arranged side by side so as to overlap each other, and the terminal side of each of the straight portions other than the two straight portions connected to both end portions of the conductive wire is connected to the terminal side of the other straight portion by a terminal side folded-back portion, and
an anti-terminal side of each of the straight portions is folded to connect to the anti-terminal side of any of the other straight portions by an anti-terminal side folded-back portion,
the coil forming device comprises
a plurality of forming dies configured to form the terminal side folded-back portion and the anti-terminal side folded-back portion as coil end portions of the lap-winding coil, an inner peripheral side and an outer peripheral side of a cross-section, perpendicular to an axial direction of the coil forming device, of each forming die having a circular arc shape, the forming dies being rotatable relative to each other about a center of curvature of an inner peripheral surface thereof as an axis of a rotation shaft,
a plurality of clamping dies each configured to hold one of the straight portions between an end surface, in a circumferential direction, of the forming die and the clamping die from both sides in the circumferential direction, an inner peripheral side and an outer peripheral side of a cross-section, perpendicular to the axial direction of the coil forming device, of each clamping die having a circular arc shape, the clamping dies being rotatable relative to each other about a center of curvature of an inner peripheral surface thereof as the axis of the rotation shaft,
a drive mechanism configured to rotationally drive the forming dies and the clamping dies, and
a driving direction change mechanism configured to change rotation directions of the forming dies and the clamping dies,
each pair of the forming die and the clamping die holding the straight portion from both sides in the circumferential direction have equal widths in the radial direction of the coil forming device, and
the forming dies and the clamping dies holding a plurality of the straight portions disposed from an inner peripheral side of the coil forming device toward an outer peripheral side of the coil forming device are disposed alternately in the circumferential direction with the straight portions interposed therebetween.

A coil forming method according to the present invention is a coil forming method for unfolding a folded intermediate coil formed from one conductive wire, into a lap-winding coil to be mounted to two different slots of a stator core of a rotary electric machine including an annular yoke portion and a plurality of tooth portions projecting from the yoke portion to an inner side in a radial direction, wherein
in the intermediate coil, both end portions of the conductive wire are directed in the same direction at a terminal side, four or more straight portions the number of which is an even number are arranged side by side so as to overlap each other, and the terminal side of each of the straight portions other than the two straight portions connected to both end portions of the conductive wire is connected to the terminal side of the other straight portion by a terminal side folded-back portion, and
an anti-terminal side of each of the straight portions is connected to the anti-terminal side of any of the other straight portions by an anti-terminal side folded-back portion, and
the coil forming method comprises
a plane bending step of forming the intermediate coil, and
a coil unfolding step of relatively increasing a relative distance between the two adjacent straight portions of the intermediate coil in a circumferential direction when the lap-winding coil is mounted to the stator core.

A coil forming method according to the present invention is a coil forming method for unfolding a folded intermediate coil formed from one conductive wire, by using a coil forming device for unfolding the intermediate coil into a lap-winding coil capable of being mounted to two different slots of a stator core of a rotary electric machine including an annular yoke portion and a plurality of tooth portions projecting from the yoke portion to an inner side in a radial direction, wherein
the intermediate coil is folded through plane bending of the one conductive wire on a plane over an overall length thereof such that
both end portions of the conductive wire are directed in the same direction at a terminal side, four or more straight portions the number of which is an even number are arranged side by side so as to overlap each other, and the terminal side of each of the straight portions other than the two straight portions connected to both end portions of the conductive wire is connected to the terminal side of the other straight portion by a terminal side folded-back portion, and
an anti-terminal side of each of the straight portions is folded to connect to the anti-terminal side of any of the other straight portions by an anti-terminal side folded-back portion,
the coil forming device comprises
a plurality of forming dies configured to form the terminal side folded-back portion and the anti-terminal side folded-back portion as coil end portions of the lap-winding coil, an inner peripheral side and an outer peripheral side of a cross-section, perpendicular to an axial direction of the coil forming device, of each forming die having a circular arc shape, the forming dies being rotatable relative to each other about a center of curvature of an inner peripheral surface thereof as an axis of a rotation shaft,
a plurality of clamping dies each configured to hold one of the straight portions between an end surface, in a circumferential direction, of the forming die and the clamping die from both sides in the circumferential direction, an inner peripheral side and an outer peripheral side of a cross-section, perpendicular to the axial direction of the coil forming device, of each clamping die having a circular arc shape, the clamping dies being rotatable relative to each other about a center of curvature of an inner peripheral surface thereof as the axis of the rotation shaft,
a drive mechanism configured to rotationally drive the forming dies and the clamping dies, and
a driving direction change mechanism configured to change rotation directions of the forming dies and the clamping dies,
each pair of the forming die and the clamping die holding the straight portion from both sides in the circumferential direction have equal widths in the radial direction of the coil forming device,
the forming dies and the clamping dies holding a plurality of the straight portions disposed from an inner peripheral side of the coil forming device toward an outer peripheral side of the coil forming device are disposed alternately in the circumferential direction with the straight portions interposed therebetween,
the coil forming device further comprises
an inner wall provided at an inner peripheral side of the clamping die disposed closest to the inner peripheral side in the radial direction of the coil forming device, an outer peripheral side of a cross-section, perpendicular to the axial direction of the coil forming device, of the inner wall having a circular arc shape, the inner wall being rotatable about a center of curvature of an outer peripheral surface thereof as the axis of the rotation shaft, and
an outer wall provided at an outer peripheral side of the clamping die disposed closest to the outer peripheral side in the radial direction of the coil forming device, an inner peripheral side of a cross-section, perpendicular to the axial direction of the coil forming device, of the outer wall having a circular arc shape, the outer wall being rotatable about a center of curvature of an inner peripheral surface thereof as the axis of the rotation shaft,
guide grooves configured to guide the coil end portions are formed between the inner wall and the first forming die disposed at an outer side, in the radial direction of the coil forming device, of the inner wall, between the forming die and the next forming die disposed at the outer side, in the radial direction of the coil forming device, of the forming die, and between the outer wall and the forming die disposed closest to the outer peripheral side and at an inner side, in the radial direction of the coil forming device, of the outer wall,
a position, in the radial direction, of an Nth guide groove from the inner side and a position, in the radial direction, of an N+1th guide groove from the inner side are different from each other by the conductive wire guided by the Nth guide groove,
an obliquely-cut terminal side oblique side portion forming slope is provided at a corner of the forming die at the terminal side and at a side at which the clamping die paired with the forming die is located,
an obliquely-cut anti-terminal side oblique side portion forming slope is provided at a corner of the forming die at the anti-terminal side and at the side at which the clamping die paired with the forming die is located,
cutouts are provided in an end portion, closest to the terminal side, of the terminal side oblique side portion forming slope and in an end portion, closest to the anti-terminal-side, of the anti-terminal side oblique side portion forming slope so as to be cut out perpendicularly to the axial direction,
the coil forming method comprises
a plane bending step of forming the intermediate coil, and
a coil unfolding step of relatively increasing a relative distance between the two adjacent straight portions of the intermediate coil in a circumferential direction when the lap-winding coil is mounted to the stator core, and
in the coil unfolding step,
the one terminal side folded-back portion is elongated in the circumferential direction within the two guide grooves the positions of which are different from each other by the one conductive wire in the radial direction, and extends through a lane change groove formed between the cutouts of the forming dies forming the respective guide grooves, to become a lane change portion of the coil end portion at the terminal side, and
the one anti-terminal side folded-back portion is elongated in the circumferential direction within the two guide grooves at an innermost side and at an outermost side, and extends through a lane change groove formed between the cutouts of the forming dies forming the respective guide grooves, and across another coil end portion at the anti-terminal side, to become a lane change portion of the coil end portion at the anti-terminal side.

### Effect of the Invention

With the coil forming device according to the present invention, the straight portions of the intermediate coil can be held from both sides in the circumferential direction by using the forming dies and the clamping dies and unfolded in the circumferential direction with the same curvature as the curvature at the mounting position to the stator core. Thus, the respective slot-accommodated portions of the coil can be accurately formed at one time with the same positional relationship as the mutual positional relationship established when the slot-accommodated portions are accommodated in the slots of the stator core after formation.

With the coil forming method according to the present invention, the planar intermediate coil is formed once and then unfolded into the coil having a concentrically wound shape that is the same as the actual coil shape, and thus the formability of the coil is good. In addition, in inserting the stator core to the stator coil obtained by assembling the plurality of coils, no change in the shapes of the coils is caused, so that damage of the film of the conductive wire can be prevented.

### Brief Description of the Drawings

- FIG. 1: is a schematic perspective view of a stator according to Embodiment 1 of the present invention.
- FIG. 2: is a schematic cross-sectional view of the stator according to Embodiment 1 of the present invention, taken along a direction perpendicular to an axial direction.
- FIG. 3: shows a perspective view and a plan view of a split core according to Embodiment 1 of the present invention.
- FIG. 4: is a schematic diagram showing a step of inserting the split core to a stator coil according to Embodiment 1 of the present invention.
- FIG. 5: shows a front view and plan views of a coil according to Embodiment 1 of the present invention.
- FIG. 6: is a schematic partial view of a cross-section of the stator core, in which one coil according to Embodiment 1 of the present invention is disposed, taken along the direction perpendicular to the axial direction.
- FIG. 7: is a flowchart schematically showing a process for forming the coil according to Embodiment 1 of the present invention.
- FIG. 8: is a plan view of a conductive wire having undergone a first plane bending step according to Embodiment 1 of the present invention.
- FIG. 9: is an enlarged view of a main part of FIG. 8.
- FIG. 10: is a plan view of an intermediate coil having undergone a second plane bending step according to Embodiment 1 of the present invention.
- FIG. 11: is a conceptual diagram showing the configuration of a coil forming device according to Embodiment 1 of the present invention.
- FIG. 12: shows views of the coil forming device according to Embodiment 1 of the present invention as seen from a terminal side.
- FIG. 13: shows perspective views showing a state where an inner wall is removed in FIG. 12.
- FIG. 14: shows plan views of the coil forming device according to Embodiment 1 of the present invention as seen from the terminal side.
- FIG. 15: shows views of the coil forming device according to Embodiment 1 of the present invention as seen from an anti-terminal side.
- FIG. 16: shows perspective views showing a state where the inner wall is removed in FIG. 15.
- FIG. 17: shows plan views of the coil forming device according to Embodiment 1 of the present invention as seen from the anti-terminal side.
- FIG. 18: shows cross-sectional views of the coil forming device according to Embodiment 1 of the present invention taken along the direction perpendicular to the axial direction, as seen from the terminal side.
- FIG. 19: is a diagram showing directions in which straight portions of the intermediate coil mounted to the coil forming device according to Embodiment 1 of the present invention are unfolded into slot-accommodated portions.
- FIG. 20: is a cross-sectional view of a main part of a stator according to Embodiment 2 of the present invention.
- FIG. 21: is a flowchart schematically showing a process for forming a coil according to Embodiment 2 of the present invention.
- FIG. 22: is a diagram showing cross-sectional shape formed portions of a conductive wire according to Embodiment 2 of the present invention.
- FIG. 23: is a schematic diagram showing states before and after a straight portion of an intermediate coil according to Embodiment 2 of the present invention is formed.
- FIG. 24: is a plan view of the intermediate coil according to Embodiment 2 of the present invention.
- FIG. 25: shows cross-sectional views of a coil forming device to which the intermediate coil according to Embodiment 2 of the present invention is mounted, taken along the direction perpendicular to the axial direction, as seen from the terminal side.
- FIG. 26: is a diagram showing directions in which the straight portions of the intermediate coil mounted to the coil forming device according to Embodiment 2 of the present invention are unfolded into slot-accommodated portions of the coil.
- FIG. 27: is a front view showing an example of another coil according to Embodiment 2 of the present invention.
- FIG. 28: is a flowchart schematically showing a process for forming a coil according to Embodiment 3 of the present invention.
- FIG. 29: is a schematic diagram showing states before and after straight portions of an intermediate coil according to Embodiment 3 of the present invention are formed.
- FIG. 30: is a plan view of an intermediate coil according to Embodiment 4 of the present invention.
- FIG. 31: shows a front view and plan views of a coil according to Embodiment 4 of the present invention.
- FIG. 32: is a perspective view of a stator in a state where a shrunk coil cage is mounted to a stator core according to Embodiment 5 of the present invention.
- FIG. 33: is a view of the stator core according to Embodiment 5 of the present invention as seen from the axial direction.
- FIG. 34: is a perspective view of a coil cage according to Embodiment 5 of the present invention.
- FIG. 35: is a schematic front view of a lap-winding coil according to Embodiment 5 of the present invention.
- FIG. 36: is a schematic side view of the lap-winding coil according to Embodiment 5 of the present invention.
- FIG. 37: is a perspective view of a coil forming device in a state where an intermediate coil according to Embodiment 5 of the present invention is held.
- FIG. 38: is a cross-sectional view of FIG. 37 taken along the axial direction at the intermediate coil.
- FIG. 39: is a perspective view showing a state where an inner wall is removed in FIG. 37.
- FIG. 40: is a perspective view of the coil forming device 550 according to Embodiment 5 of the present invention after the lap-winding coil is formed, showing a state where the inner wall is removed.
- FIG. 41: is a view of a state where an inner core is disposed inside a coil cage according to Embodiment 5 of the present invention, as seen from the axial direction and the terminal side.
- FIG. 42: is a schematic cross-sectional view showing the state where the inner core is disposed inside the coil cage according to Embodiment 5 of the present invention.
- FIG. 43: is a perspective view of the inner core to which a shrunk coil cage according to Embodiment 5 of the present invention is mounted.
- FIG. 44: is a cross-sectional view of an inner core 502a shown in FIG. 43, to which a shrunk coil cage 504k2 is mounted, taken along a plane passing through a central axis.

### Description of Embodiments

### Embodiment 1

Hereinafter, a coil forming device and a coil forming method according to Embodiment 1 of the present invention will be described with reference to the drawings.

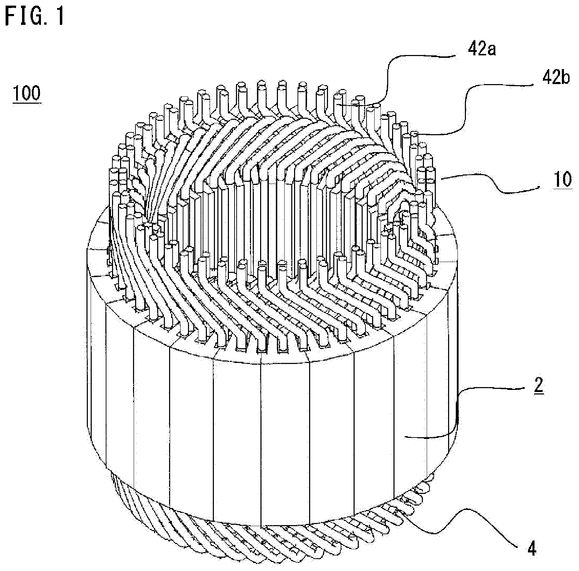

FIG. 1 is a schematic perspective view of a stator 100 according to Embodiment 1 of the present invention.

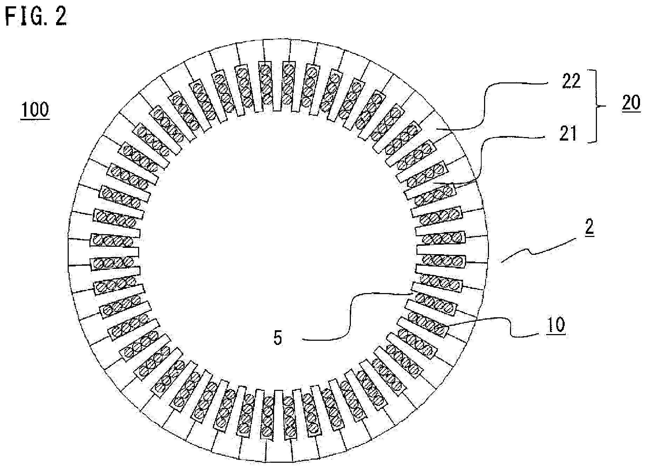

FIG. 2 is a schematic cross-sectional view of the stator 100 taken along a direction perpendicular to an axial direction.

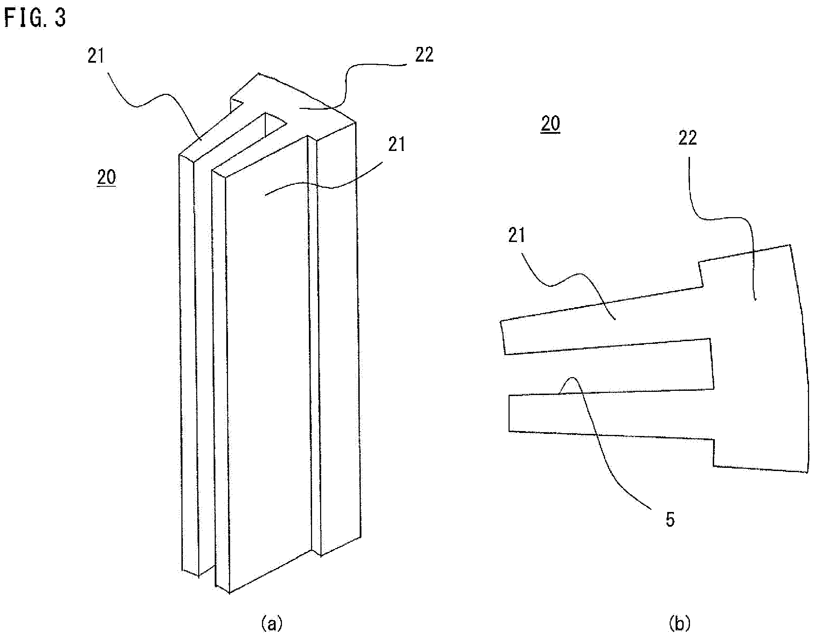

FIG. 3(a) is a perspective view of a split core 20 forming a part of a stator core 2.
FIG. 3(b) is a plan view of the split core 20.

In the description of the stator 100 in the present specification, an "axial direction", a "circumferential direction", a "radial direction", an "inner peripheral side", an "outer peripheral side", an "inner peripheral surface", an "outer peripheral surface", an "inner side", and an "outer side" that are described unless otherwise noted refer to the "axial direction", the "circumferential direction", the "radial direction", the "inner peripheral side", the "outer peripheral side", the "inner peripheral surface", the "outer peripheral surface", the "inner side", and the "outer side" of the stator core 2, respectively.

In addition, regarding "upper" and "lower", a plane perpendicular to the axial direction is assumed at a reference location, and the side, including the central point of the stator core 2, with respect to the plane as a boundary is defined as "lower", and the opposite side is defined as "upper". Moreover, when heights are compared, the height at which a distance from the center of the stator core 2 is longer is defined as "high".

In the description of the coil forming device in the present specification, an "axial direction", a "circumferential direction", a "radial direction", an "inner peripheral side", an "outer peripheral side", an "inner peripheral surface", an "outer peripheral surface", an "inner side", and an "outer side" that are described unless otherwise noted refer to the "axial direction", the "circumferential direction", the "radial direction", the "inner peripheral side", the "outer peripheral side", the "inner peripheral surface", the "outer peripheral surface", the "inner side", and the "outer side" of the coil forming device, respectively. In addition, regarding "upper" and "lower", a plane perpendicular to the axial direction is assumed at a reference location, and the side, including the central point of the coil forming device, with respect to the plane as a boundary is defined as "lower", and the opposite side is defined as "upper". Moreover, when heights are compared, the height at which a distance from the center of the coil forming device is longer is defined as "high".

In the stator 100, a side at which a first terminal wire 42a that is one terminal wire of a coil 4 and a second terminal wire 42b that is another terminal wire of the coil 4 extend upward in the axial direction from the stator core 2, is referred to as a terminal side, and a side opposite thereto (a side at which there is no terminal wire) is referred to as an anti-terminal side.

As shown in FIGS. 1 and 2, the stator 100 of the present embodiment includes a stator coil 10 formed by connecting a plurality of (48 here) lap-winding coils 4 (hereinafter, referred to merely as coils 4) to the cylindrical stator core 2 in the circumferential direction.

As shown in FIGS. 2 and 3, the stator core 2 includes a plurality of split cores 20 into which stator core 2 is divided in the circumferential direction. All the split cores 20 have the same shape and include back yokes 22 that are equally split in the circumferential direction, and teeth 21 that project radially inward from the inner peripheral surfaces of the back yokes 22. As shown in FIG. 2, a slot 5 that houses the stator coil 10 is formed between the teeth 21 adjacent to each other when the cores 20 are combined, in the circumferential direction.

Although not shown, a sheet-like insulating member that ensures mutual insulation between the stator core 2 and the stator coil 10 is attached between the stator core 2 and the stator coil 10.

The stator coil 10 is formed by connecting the plurality of coils 4 described in detail later, and coil groups of three phases, that is, U phase, V phase, and W phase, are Y-connected in the stator coil 10. Each coil 4 is wound on the stator core 2 such that each slot-accommodated portion of each coil 4 is exposed from the stator core 2 at both axial end portions thereof, extends across a plurality of (six here) teeth 21, and is inserted into another slot 5. That is, the stator coil 10 is a distributed-winding coil.

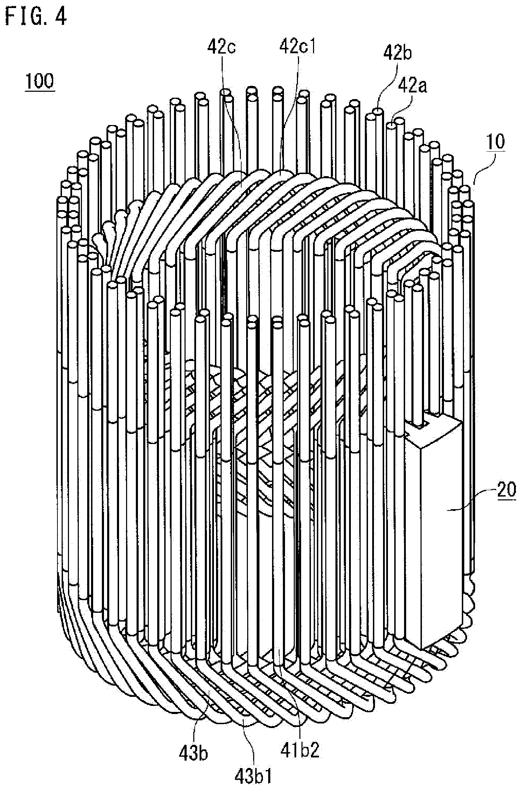

FIG. 4 is a schematic diagram showing a step of inserting the split core 20 to the stator coil 10 that is a coil cage obtained by combining and connecting the plurality of coils 4.

The stator coil 10 is formed in a cage shape by arranging the coils 4 at equal intervals in the circumferential direction. The split core 20 to which the insulating member, which is not shown, is attached is inserted to the stator coil 10 from the outer side toward the inner side in the radial direction such that the coil 4 is disposed in the slot 5, which is formed between the two teeth 21 in the circumferential direction, with the insulating member interposed therebetween. When all the split cores 20 are assembled to the stator coil 10 and end portions of the coils 4 are connected to each other, the stator 100 in which the stator core 2 and the stator coil 10 are assembled to each other is formed. In the present embodiment, the stator coil 10 and the stator core 2 including the 48 coils 4, the 48 slots 5, and the 48 teeth 21 are illustrated, but the present invention is not limited thereto.

Next, the coil 4 will be described.

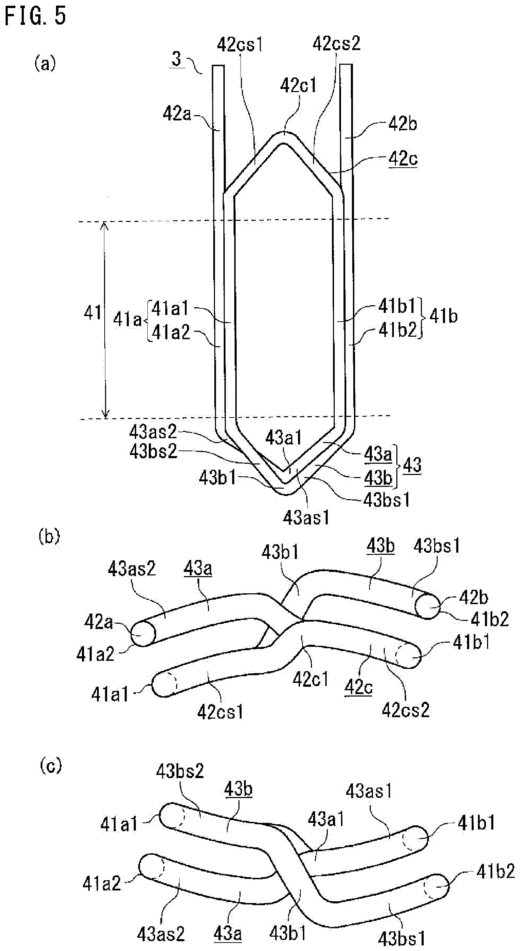

FIG. 5(a) is a front view of the coil 4 that is a minimum unit forming a part of the stator coil 10.

FIG. 5(b) is a plan view of the coil 4 as seen from the terminal side.

FIG. 5(c) is a plan view of the coil 4 as seen from the anti-terminal side.

The coil 4 is formed by winding one conductive wire 3, which includes a conductor portion and an insulating film coating the surface of the conductor portion, in an overlapping manner into a substantially hexagonal shape. That is, the coil 4 is formed in a concentric-winding manner. In addition, as the conductive wire 3, a round wire having a circular cross-sectional shape is used as shown in FIG. 5(b), but a rectangular wire having a rectangular cross-sectional shape may be used.

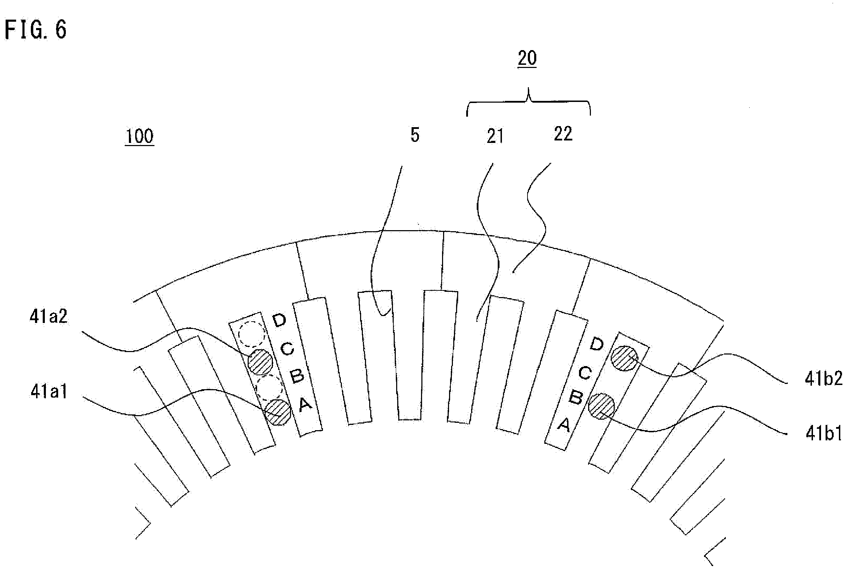

FIG. 6 is a schematic partial view of a cross-section of the stator core 2, in which one coil 4 is disposed, taken along the direction perpendicular to the axial direction.

Of the coil 4, portions to be accommodated in the slots 5 are referred to as slot-accommodated portions 41. In addition, of portions connecting the slot-accommodated portions 41 on axial end surfaces of the stator core 2, the portion present at the terminal side of the coil 4 is referred to as a terminal side coil end portion 42c, and the portion present at the anti-terminal side of the coil 4 is referred to as an anti-terminal side coil end portion 43 (a first anti-terminal side coil end portion 43a, a second anti-terminal side coil end portion 43b) (described in detail later). In addition, end portions extending in the axial direction from the slot-accommodated portions 41 are referred to as the first terminal wire 42a and the second terminal wire 42b.

Next, the detailed shape of the coil 4 and an accommodation position relationship of each portion of the conductive wire 3 in the slot 5 of the stator core 2, will be described.

In FIG. 6, the accommodation state of one coil 4 is shown, and thus cross-sections of the conductive wire 3 at only four locations are depicted. Actually, in one slot 5, four conductive wires (the coil 4 is formed of one conductive wire, but, focusing on only the interior of the slot 5, there are four wires) are accommodated. The position at which the innermost conductive wire 3 is accommodated is referred to as A (a lane A), the accommodation position at the outer side of A is referred to as B (a lane B), the accommodation position at the outer side of B is referred to as C (a lane C), and the outermost accommodation position is referred to as D (a lane D).

Of the slot-accommodated portions 41, (a pair of) the slot-accommodated portions 41 located at the left side of the drawing plane of FIG. 5(a) are first slot-accommodated portions 41a, and (a pair of) the other slot-accommodated portions 41 located at the right side of the drawing plane of FIG. 5(a) are second slot-accommodated portions 41b. In addition, as shown in FIGS. 5(a) and 6, the first slot-accommodated portions 41a include a first slot-inner-side-accommodated portion 41a1 located at the inner side of the stator core 2 within the slot 5 and a first slot-outer-side-accommodated portion 41a2 located at the outer side of the stator core 2 within the slot 5.

Similarly, the second slot-accommodated portions 41b include a second slot-inner-side-accommodated portion 41b1 located at the inner side within another slot 5 and a second slot-outer-side-accommodated portion 41b2 located at the outer side within the other slot 5. The anti-terminal side coil end portion 43 includes the first anti-terminal side coil end portion 43a and the second anti-terminal side coil end portion 43b.

Focusing on one coil 4, the first slot-outer-side-accommodated portion 41a2 connected to the first terminal wire 42a is accommodated at the position C in a certain slot 5 so as to extend from the terminal side to the anti-terminal side. The conductive wire 3 that extends from the slot 5 to the anti-terminal side becomes the first anti-terminal side coil end portion 43a, extends across six teeth 21, and is accommodated as the second slot-inner-side-accommodated portion 41b1 at the position B in another slot 5.

The conductive wire 3 that extends from the slot 5 to the terminal side becomes the terminal side coil end portion 42c, returns across the above-described six teeth 21, and is accommodated as the first slot-inner-side-accommodated portion 41a1 at the position A in the initial slot 5. Then, the conductive wire 3 that extends from the slot 5 to the anti-terminal side becomes the second anti-terminal side coil end portion 43b, extends across the six teeth 21 so as to cross over the above first anti-terminal side coil end portion 43a, is accommodated as the second slot-outer-side-accommodated portion 41b2 at the position D in the above-described other slot 5, extends therefrom to the terminal side in the axial direction, and becomes the second terminal wire 42b.

Focusing on one coil 4, how each portion forming the coil 4 is formed and arranged to the stator core 2 has been described above. Next, focusing on one slot 5, the arrangement of the conductive wire 3 within a certain slot 5 will be described.

In one slot 5, the first slot-inner-side-accommodated portion 41a1 of a certain coil 4 is accommodated at the position A, and the first slot-outer-side-accommodated portion 41a2 of the same coil 4 is accommodated at the position C. The second slot-inner-side-accommodated portion 41b1 of another coil 4 is accommodated at the position B, and the second slot-outer-side-accommodated portion 41b2 of the above other coil 4 is accommodated at the position D. As described above, the conductive wires 3 that form the first slot-accommodated portions 41a of a certain coil 4 and the conductive wires 3 that form the second slot-accommodated portions 41b of another coil 4, that is, four wires (the number of actual physical conductive wires is two), are alternately accommodated within one slot 5.

As shown in FIGS. 5(b) and 6, the terminal side coil end portion 42c is provided with a lane change portion 42c1 for achieving position adjustment so as to shift the second slot-inner-side-accommodated portion 41b1 relative to the first slot-inner-side-accommodated portion 41a1 to the outer side in the radial direction by one conductive wire 3 (here by the diameter of the conductive wire 3).

As shown in FIGS. 5(c) and 6, the first anti-terminal side coil end portion 43a is provided with a lane change portion 43a1 for achieving position adjustment so as to shift the first slot-outer-side-accommodated portion 41a2 relative to the second slot-inner-side-accommodated portion 41b1 to the outer side in the radial direction by the diameter of the conductive wire 3.

Similarly, the second anti-terminal side coil end portion 43b is provided with a lane change portion 43b1 for achieving position adjustment so as to shift the second slot-outer-side-accommodated portion 41b2 relative to the first slot-inner-side-accommodated portion 41a1 to the outer side in the radial direction by a distance equal to three times the diameter of the conductive wire 3. In addition, the second anti-terminal side coil end portion 43b is disposed so as to cover the first anti-terminal side coil end portion 43a from the upper side in the axial direction, and the lane change portion 43b1 and the lane change portion 43a1 cross each other when being seen from the anti-terminal side.

Next, a process for producing an intermediate coil 6 that is an intermediate formed body for the coil 4 will be described.

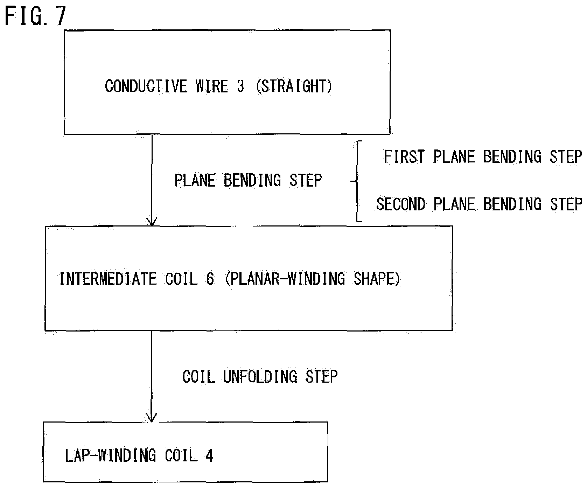

FIG. 7 is a flowchart schematically showing a process for forming the coil 4.

First, the planar intermediate coil 6 that is a base for the coil 4 is formed by continuously executing a first plane bending step and a second plane bending step on the straight conductive wire 3.

Next, the intermediate coil 6 is unfolded by a coil unfolding step, thereby forming the three-dimensionally-shaped coil 4 that can be mounted to the stator core 2.

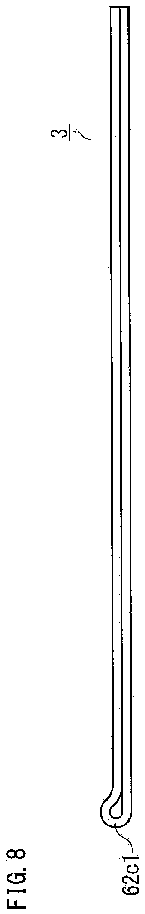

FIG. 8 is a plan view of the conductive wire 3 having undergone the first plane bending step.

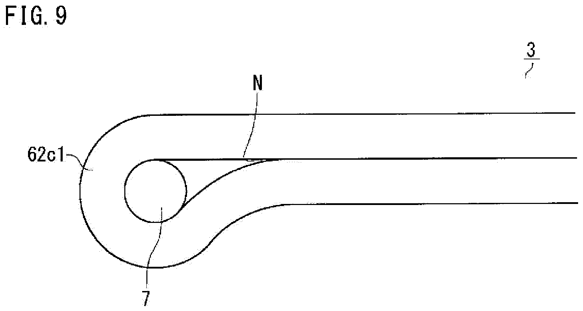

FIG. 9 is an enlarged view of a main part of FIG. 8.

By the first plane bending step, the straight conductive wire 3 is bent on a plane so as to be folded in two. A portion bent by the first plane bending step is referred to as a first bent portion 62c1.

In bending the conductive wire 3 into a hairpin shape to form the first bent portion 62c1, the conductive wire 3 is folded back so as to be wound on a pin 7 or the like having a predetermined diameter, as shown in FIG. 9. At this time, the folded back conductive wires 3 are brought into contact with each other from a portion close to the pin 7 (a portion N shown in the drawing) such that no gap is formed between the folded back conductive wires 3. The shape of the first bent portion 62c1 is not limited to the hairpin shape shown in FIG. 9, and may be any shape that allows the conductive wire 3 to be folded back in two such that the conductive wires 3 are brought into contact with each other.

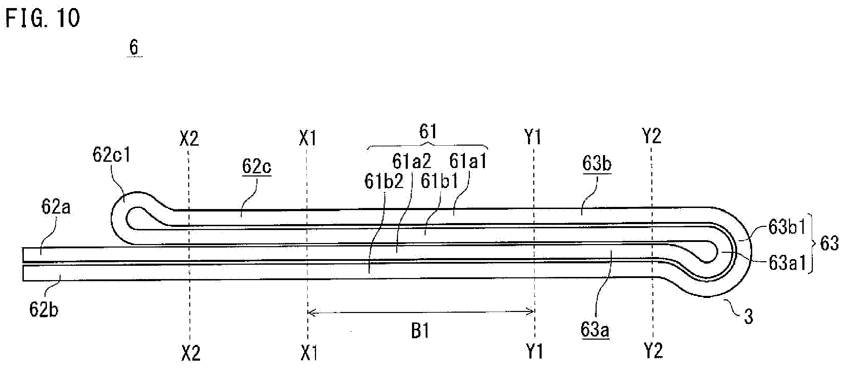

FIG. 10 is a plan view of the intermediate coil 6 having undergone the second plane bending step.

Next, as shown in FIG. 10, the two wire portions of the conductive wire 3 having undergone the first plane bending step are further folded back in two together on the same plane. At this time, the conductive wire 3 is folded back such that the side thereof at which the first bent portion 62c1 is not present is slightly longer. Accordingly, a second bent portion 63 is formed at opposite side of the first bent portion 62c 1. At the second bent portion 63, the double conductive wire 3 is bent in an overlapping manner.

By folding back the one conductive wire 3 on the same plane twice as described above, the planar intermediate coil 6 is formed in which the four conductive wires 3 are arranged side by side in an overlapping manner (to be exact, the conductive wire 3 is one continuous wire, but, for convenience of explanation, each straight portion of the conductive wire 3 is described as one wire).

Left side portions of the two upper conductive wires 3 (one straight portion is counted as one wire) shown in FIG. 10 with respect to a line X1-X1 are a first folded-back portion 62c (terminal side folded-back portion). A left side portion of the first folded-back portion 62c with respect to a line X2-X2 on the drawing plane of FIG. 10 is the first bent portion 62c1. As a result of the subsequent coil unfolding step, the first folded-back portion 62c becomes the terminal side coil end portion 42c of the coil 4, and the first bent portion 62c1 becomes the lane change portion 42c1 of the coil 4.

A portion at the right side with respect to a line Y1-Y1 shown in FIG. 10 and at the inner side of the doubly folded-back conductive wire 3 is a second inner side folded-back portion 63a (anti-terminal side folded-back portion), and a portion at the right side with respect to the line Y1-Y1 and at the outer side of the doubly folded-back conductive wire 3 is a second outer side folded-back portion 63b (anti-terminal side folded-back portion). Of the second inner side folded-back portion 63a, a right side portion with respect to a line Y2-Y2 shown in FIG. 10 is a second inner side bent portion 63a1, and a similar portion of the second outer side folded-back portion 63b is a second outer side bent portion 63b1.

As a result of the subsequent coil unfolding step, the second inner side folded-back portion 63a becomes the first anti-terminal side coil end portion 43a of the coil 4, and the second outer side folded-back portion 63b becomes the second anti-terminal side coil end portion 43b of the coil 4. In addition, the second inner side bent portion 63a1 becomes the lane change portion 43a1 of the first anti-terminal side coil end portion 43a, and the second outer side bent portion 63b1 becomes the lane change portion 43b1 of the second anti-terminal side coil end portion 43b.

As described above, straight portions 61a1 to 61b2, in an intermediate portion shown in FIG. 10 (a range shown by B1), of the intermediate coil 6 are portions that become the slot-accommodated portions 41 of the coil 4 as a result of the subsequent coil unfolding step. The straight portion 61a1 becomes the first slot-inner-side-accommodated portion 41a1, the straight portion 61b1 becomes the second slot-inner-side-accommodated portion 41b1, the straight portion 61a2 becomes the first slot-outer-side-accommodated portion 41a2, and the straight portion 61b2 becomes the second slot-outer-side-accommodated portion 41b2.

The straight portions 61a1 to 61b2 of the intermediate coil 6 are aligned in order from the straight portion arranged at the inner side position within the slot 5 to the straight portion arranged at the outer side position within slot 5. Here, the straight portions of the intermediate coil 6 are aligned in order from the straight portion arranged as the conductive wire 3 at the inner side in the radial direction, of the respective slot-accommodated portions of the coil 4, but may be aligned in reverse order.

Next, a coil forming device for forming the intermediate coil 6 into the coil 4 and a method for forming the coil 4 from the intermediate coil 6 by using the coil forming device will be described. In the following description, of the conductive wire 3 of the intermediate coil 6 shown in FIG. 10, a portion, including the straight portion 61a1, from the left end to the right end on the drawing plane is referred to as a first wire. Similarly, a portion including the straight portion 61b1 is referred to as a second wire, a portion including the straight portion 61a2 is referred to as a third wire, and a portion including the straight portion 61b2 is referred to as a fourth wire.

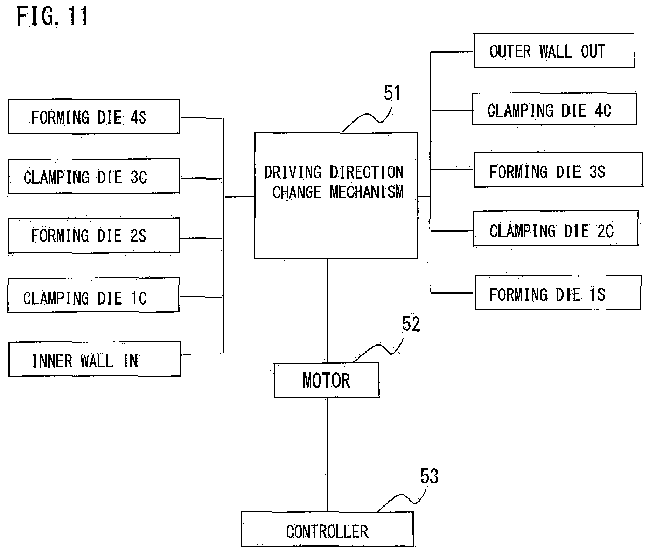

FIG. 11 is a conceptual diagram showing the configuration of a coil forming device 50. The coil forming device 50 includes: forming dies 1S to 4S for forming the intermediate coil 6 into the shape of the coil 4; clamping dies 1C to 4C for fixing the intermediate coil 6 to the forming dies 1S to 4S; an outer wall OUT for holding the intermediate coil 6 from the outer peripheral side; an inner wall IN for holding the intermediate coil 6 from the inner peripheral side; a driving direction change mechanism 51 for individually changing driving directions of the forming dies 1S to 4S, the clamping dies 1C to 4C, the outer wall OUT, and the inner wall IN; a motor 52 serving as a drive mechanism for adding driving force to the driving direction change mechanism 51; and a controller 53 for controlling the driving direction change mechanism 51 and a drive amount to the motor 52.

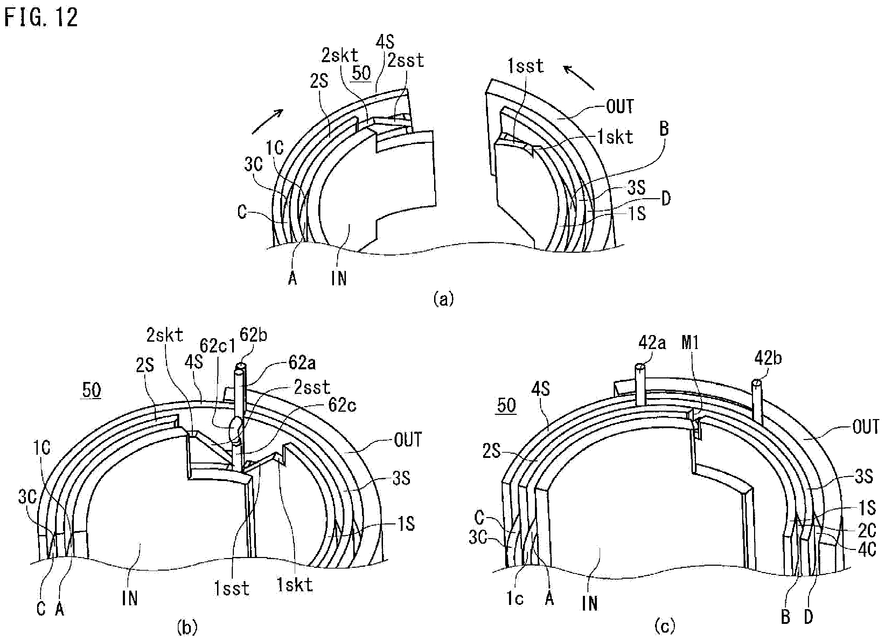

FIG. 12(a) is a perspective view of a main part of the coil forming device 50 as seen from the terminal side and shows a state before the intermediate coil 6 is mounted (a preparation position). The driving direction change mechanism 51, the motor 52, and the controller 53 are not shown therein.

FIG. 12(b) is a perspective view of the main part of the coil forming device 50 as seen from the terminal side and shows a state where the intermediate coil 6 is mounted (a holding position).

FIG. 12(c) is a perspective view of the main part of the coil forming device 50 as seen from the terminal side and shows a state after the intermediate coil 6 is formed into the shape of the coil 4 (a forming position).

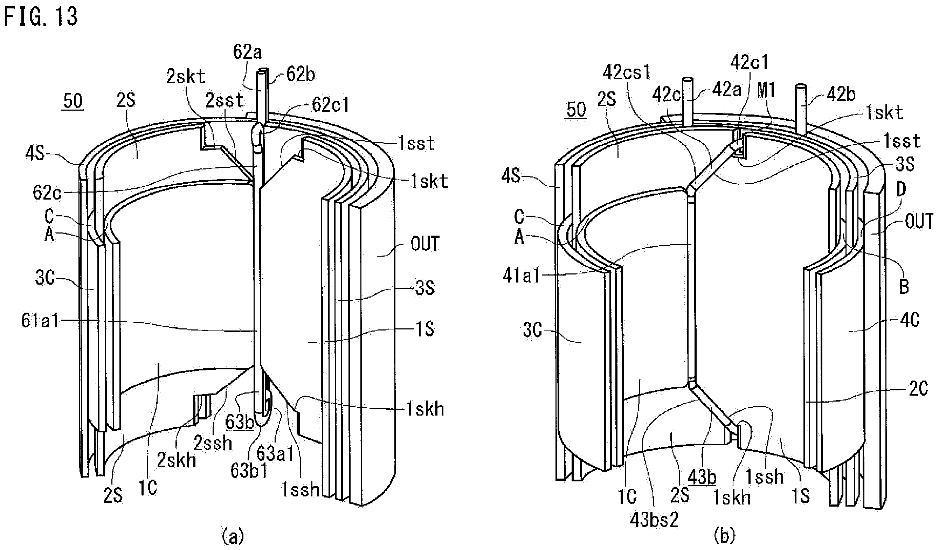

FIG. 13(a) is a perspective view showing a state where the left inner wall IN is removed in FIG. 12(b).

FIG. 13(b) is a perspective view showing a state where the left inner wall IN is removed in FIG. 12(c).

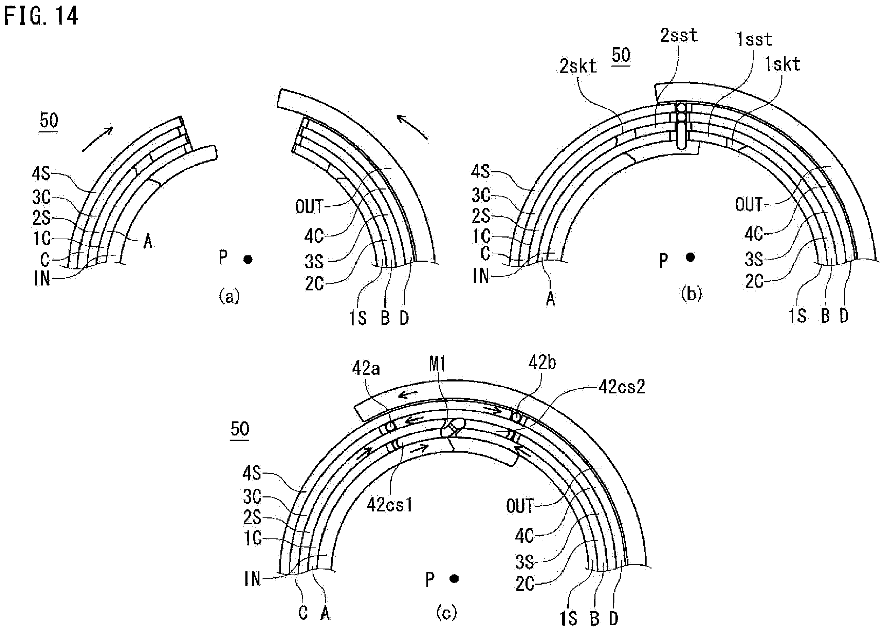

FIG. 14(a) is a plan view of the coil forming device 50 as seen from the terminal side and shows a state before the intermediate coil 6 is mounted.

FIG. 14(b) is a plan view of the coil forming device 50 as seen from the terminal side and shows a state where the intermediate coil 6 is mounted.

FIG. 14(c) is a plan view of the coil forming device 50 as seen from the terminal side and shows a state after the intermediate coil 6 is formed into the shape of the coil 4.

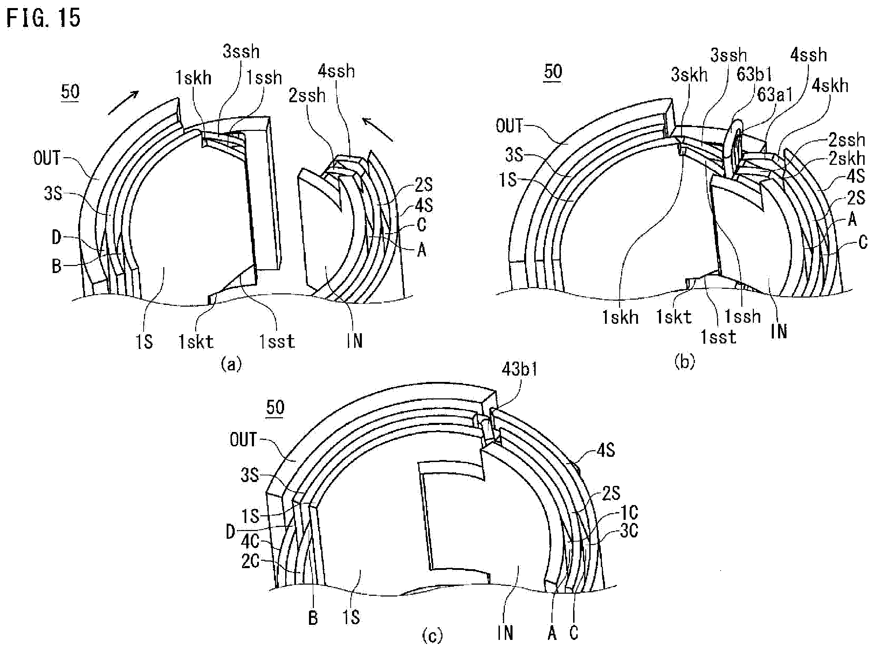

FIG. 15(a) is a perspective view of a main part of the coil forming device 50 as seen from the anti-terminal side and shows a state before the intermediate coil 6 is mounted. FIG. 15(a) is a view of FIG. 12(a) as seen from the opposite side, and thus right and left are reversed from those in FIG. 12(a).

FIG. 15(b) is a perspective view of the main part of the coil forming device 50 as seen from the anti-terminal side and shows a state where the intermediate coil 6 is mounted. FIG. 15(b) is a view of FIG. 12(b) as seen from the opposite side, and thus right and left are reversed from those in FIG. 12(b).

FIG. 15(c) is a perspective view of the main part of the coil forming device 50 as seen from the anti-terminal side and shows a state after the intermediate coil 6 is formed into the shape of the coil 4. FIG. 15(c) is a view of FIG. 12(c) as seen from the opposite side, and thus right and left are reversed from those in FIG. 12(c).

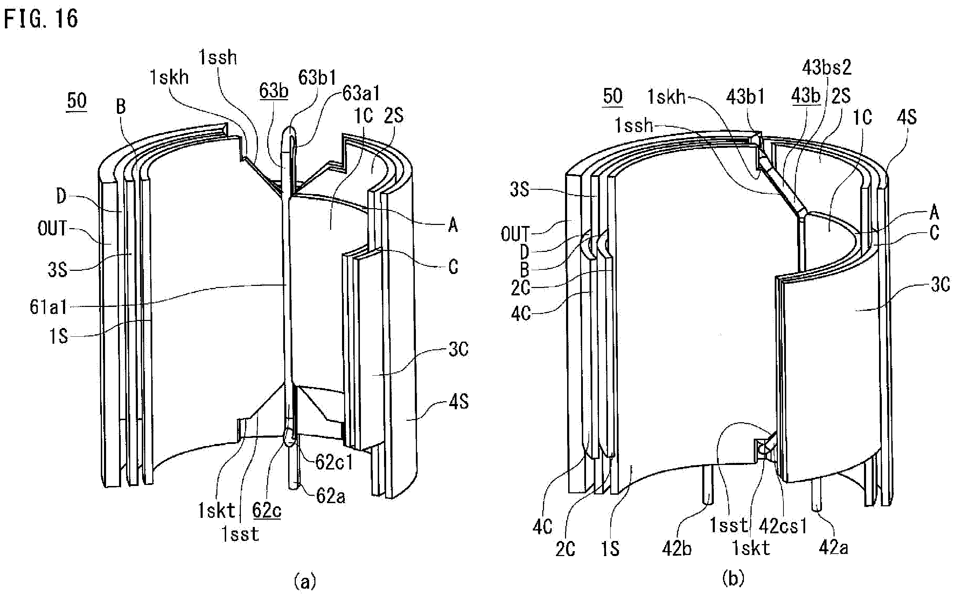

FIG. 16(a) is a perspective view showing a state where the right inner wall IN is removed in FIG. 15(b). FIG. 16(a) is a view of FIG. 13(a) as seen from the opposite side, and thus right and left are reversed from those in FIG. 13(a).

FIG. 16(b) is a perspective view showing a state where the right inner wall IN is removed in FIG. 15(c).

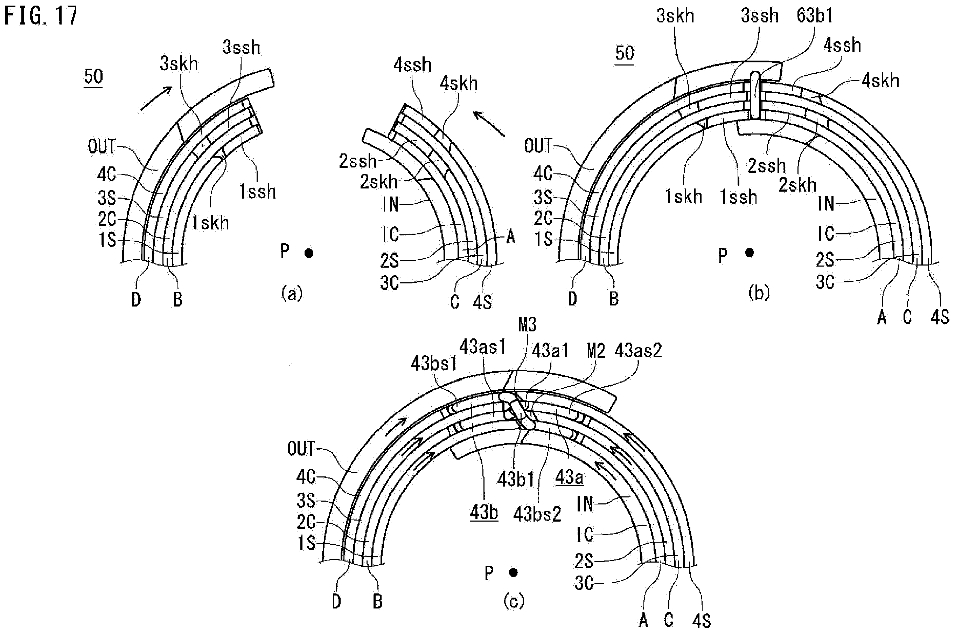

FIG. 17(a) is a plan view of the coil forming device 50 as seen from the anti-terminal side and shows a state before the intermediate coil 6 is mounted. FIG. 17(a) is a view of FIG. 14(a) as seen from the opposite side, and thus right and left are reversed from those in FIG. 14(a).

FIG. 17(b) is a plan view of the coil forming device 50 as seen from the anti-terminal side and shows a state where the intermediate coil 6 is mounted. FIG. 17(b) is a view of FIG. 14(b) as seen from the opposite side, and thus right and left are reversed from those in FIG. 14(b).

FIG. 17(c) is a plan view of the coil forming device 50 as seen from the anti-terminal side and shows a state after the intermediate coil 6 is formed into the shape of the coil 4. FIG. 17(c) is a view of FIG. 14(c) as seen from the opposite side, and thus right and left are reversed from those in FIG. 14(c).

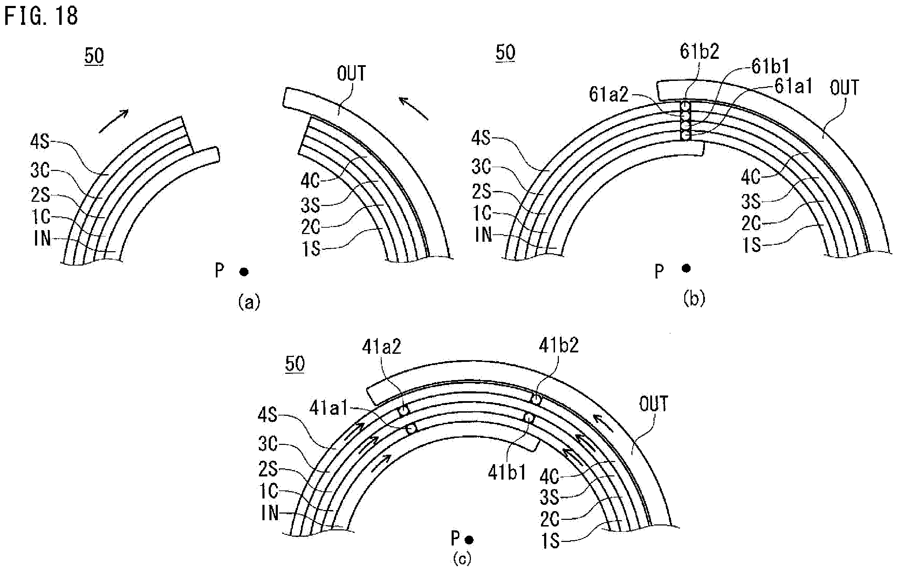

FIG. 18(a) is a cross-sectional view of the coil forming device 50 taken along the direction perpendicular to the axial direction, as seen from the terminal side. FIG. 18(a) shows a state before the intermediate coil 6 is mounted.

FIG. 18(b) is a cross-sectional view of the coil forming device 50 to which the intermediate coil 6 is mounted, taken along the direction perpendicular to the axial direction, as seen from the terminal side. FIG. 18(b) shows a state before the coil 4 is formed.

FIG. 18(c) is a cross-sectional view of the coil forming device 50 taken along the direction perpendicular to the axial direction, as seen from the terminal side. FIG. 18(c) shows a state after the intermediate coil 6 is formed into the shape of the coil 4.

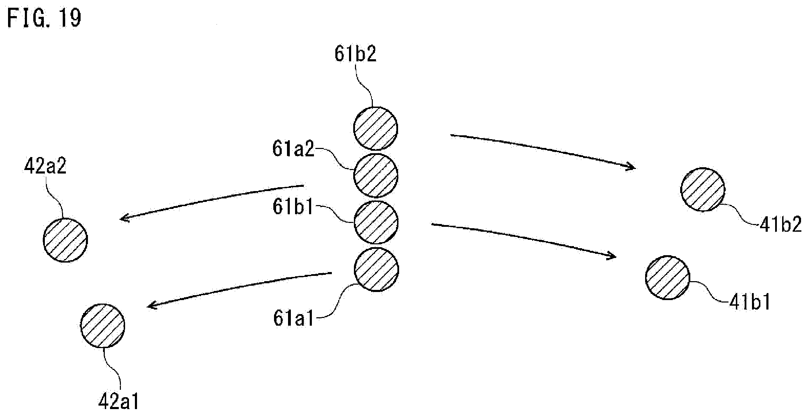

FIG. 19 is a diagram showing directions in which the straight portions 61a1 to 61b2 of the intermediate coil 6 mounted to the coil forming device 50 are unfolded into the slot-accommodated portions 41a1 to 41b2.

The forming dies 1S to 4S of the coil forming device 50 shown in the respective drawings are frames for forming the coil 4 from the intermediate coil 6 such that the first to fourth wires of the intermediate coil 6 extend along the outer peripheral surfaces of the forming dies 1S to 4S. The clamping dies 1C to 4C are fixing tools for holding and fixing the straight portions 61a1 to 61b2 of the first to fourth wires between the end surfaces of the forming dies 1S to 4S in the circumferential direction.

As shown in FIGS. 12 and 14(a), in the coil forming device 50, in an open state where the coil forming device 50 does not hold the intermediate coil 6, the inner wall IN, the clamping die 1C, the forming die 2S, the clamping die 3C, and the forming die 4S, each of which has a cross-section that is perpendicular to the axial direction and that has an inner peripheral side and an outer peripheral side formed into a circular arc shape, are aligned in the radial direction from the inner side toward the outer side, as components of a first group shown at the left side of FIG. 14(a).

The forming die 1S, the clamping die 2C, the forming die 3S, the clamping die 4C, and the outer wall OUT, each of which has a cross-section that is perpendicular to the axial direction and that has an inner peripheral side and an outer peripheral side formed into a circular arc shape, are aligned in the radial direction from the inner side toward the outer side, as components of a second group shown at the right of FIG. 14(a), so as to be spaced apart from the first group in the circumferential direction.

The cross-sections, perpendicular to the axial direction, of the outer peripheral surfaces and the inner peripheral surfaces of the inner wall IN, the forming dies 1S to 4S, the clamping dies 1C to 4C, and the outer wall OUT all have circular arc shapes having the same center of curvature when the stator core 2 is assumed to be placed over the coil forming device 50 from the axial direction. In addition, a pair of the forming die 1S and the clamping die 1C are located equidistant from an axis P of a rotation shaft of the coil forming device 50 and have equal widths in the radial direction.

The same applies to the forming die 2S and the clamping die 2C, the forming die 3S and the clamping die 3C, and the forming die 4S and the clamping die 4C. In each of the first and second groups, the forming dies and the clamping dies are arranged so as to be aligned alternately in the radial direction. That is, in the first group, the forming dies 2S and 4S are arranged with the clamping die 3C interposed therebetween, and the forming die 2S and the inner wall IN are arranged with the clamping die 1C interposed therebetween.

In addition, in the second group, the clamping dies 2C and 4C are arranged with the forming die 3S interposed therebetween, and the forming die 3S and the outer wall OUT are arranged with the clamping die 4C interposed therebetween. Therefore, focusing on a combination of the forming dies and the clamping dies holding the respective straight portions 61a1 to 61b2 of the intermediate coil 6 from the circumferential direction, the forming dies and the clamping dies are alternately arranged such that right and left are reversed toward the outer peripheral side. The inner wall IN, the forming dies 1S to 4S, the clamping dies 1C to 4C, and the outer wall OUT are each rotatable clockwise and counterclockwise about the above-described center of curvature as the axis P of the rotation shaft.

Next, an intermediate coil holding step of holding the intermediate coil 6 by the coil forming device 50 as shown in FIG. 12(b) will be described.

The coil forming device 50 holds the intermediate coil 6 such that the longitudinal direction of the intermediate coil 6 coincides with the axial direction of the coil forming device 50 and the respective straight portions 61a1 to 61b2 of the intermediate coil 6 are aligned in the radial direction of the coil forming device.

When the inner wall IN, the clamping die 1C, the forming die 2S, the clamping die 3C, and the forming die 4S are rotated clockwise from the preparation position shown in FIG. 12(a) to the holding position shown in FIG. 12(b), and the forming die 1S, the clamping die 2C, the forming die 3S, the clamping die 4C, and the outer wall OUT are rotated counterclockwise from an open position to the holding position, the straight portion 61a1 of the first wire is held from both sides in the circumferential direction over the overall length thereof by the forming die 1S and the clamping die 1C, the straight portion 61b1 of the second wire is held from both sides in the circumferential direction over the overall length thereof by the forming die 2S and the clamping die 2C, the straight portion 61a2 of the third wire is held from both sides in the circumferential direction over the overall length thereof by the forming die 3S and the clamping die 3C, and the straight portion 61b2 of the fourth wire is held from both sides in the circumferential direction over the overall length thereof by the forming die 4S and the clamping die 4C.

Next, a coil forming step of forming the intermediate coil 6 into the shape of the coil 4 by the coil forming device 50 will be described.

In the intermediate coil holding step, from a state where the respective straight portions 61a1 to 61b2 of the intermediate coil 6 are held, the inner wall IN, the forming die 2S, the clamping die 2C, the forming die 4S, and the clamping die 4C are rotated clockwise by 22.5° to a coil forming position, as shown in FIGS. 14(c) and 18(c), with the respective straight portions 61a1 to 61b2 held.

Simultaneously with this rotation, the forming die 1S, the clamping die 1C, the forming die 3S, the clamping die 3C, and the outer wall OUT are rotated counterclockwise by 22.5° to the coil forming position. Accordingly, two wires, that is, the first wire and the third wire, and two wires, that is, the second wire and the fourth wire are separated from each other in the circumferential direction and located at positions away from each other by 45°. There are 48 slots with respect to 360°. Thus, when these wires are separated from each other by 45°, these wires are separated from each other by six slots. Thus, the straight portions 61a1 to 61b2 are formed as the slot-accommodated portions 41a1 to 41b2 of the coil 4.

Next, a process for forming each coil end portion of the coil 4 from the intermediate coil 6 will be described. For convenience of explanation, a description will be given mainly with the first wire. As shown in FIGS. 12(a) to 12(c), a guide groove A is formed between the outer peripheral surface of the inner wall IN and the inner peripheral surface of the forming die 2S, similarly, a guide groove C is formed between the forming die 2S and the forming die 4S, a guide groove B is formed between the forming die 1S and the forming die 3S, and a guide groove D is formed between the forming die 3S and the outer wall OUT.

The distances from the axis P of the coil forming device 50 to the guide grooves A to D are equal to the distances from the axis of the stator 100 to the positions A to D shown in FIG. 6 at which the slot-accommodated portions 41a1 to 41b2 are located as shown in FIG. 6. That is, the positions A to D in the stator core 2 correspond to the positions of the guide grooves A to D in the coil forming device 50, the distances from the axis P of the coil forming device 50 to the guide groove A and the guide groove B are different from each other by one conductive wire 3 guided to the guide groove A (here, by the diameter of the conductive wire 3).

The terminal side coil end portion 42c, the first anti-terminal side coil end portion 43a, and the second anti-terminal side coil end portion 43b of the coil 4 are formed along the end surfaces, in the axial direction, of the forming dies 1S to 4S within the guide grooves A to D. The respective guide grooves A to D are grooves for guiding the coil end portions 42c, 43a, and 43b.

When the inner wall IN, the forming dies 1S to 4S, the clamping dies 1C to 4C, and the outer wall OUT of the coil forming device 50 are driven so as to move from the holding position shown in FIGS. 12(b) and 13(a) to the forming position shown in FIG. 13(b), the straight portion 61a1 of the first wire moves counterclockwise while being held by the forming die 1S and the clamping die 1C, and the straight portion 61b1 of the second wire moves clockwise while being held by the forming die 2S and the clamping die 2C. Thus, the first folded-back portion 62c formed between the terminal side end portion of the straight portion 61a1 and the terminal side end portion of the straight portion 61b1 is gradually elongated in the circumferential direction of the coil forming device 50.

At this time, of the first folded-back portion 62c, a slightly-less-than-half portion (excluding the first bent portion 62c1) at the clamping die 1C side shown in FIG. 14(c) is located within the guide groove A, and a slightly-less-than-half portion at the clamping die 2C side is located within the guide groove B. An obliquely-cut oblique side portion forming slope 1sst (terminal side oblique side forming slope) is provided at the corner of the forming die 1S at the terminal side and the clamping die 1C side. In addition, an obliquely-cut oblique side portion forming slope 1ssh (anti-terminal side oblique side forming slope) is also provided at the corner of the forming die 1S at the anti-terminal side and the clamping die 1C side.

The slightly-less-than-half portion at the clamping die 1C side of the gradually elongated first folded-back portion 62c is formed into an oblique side portion 42cs1 along the oblique side portion forming slope 1sst of the forming die 1S. Similarly, the slightly-less-than-half portion at the clamping die 2C side of the first folded-back portion 62c is formed into an oblique side portion 42cs2 along an oblique side portion forming slope 2sst that is formed at the corner of the forming die 2S at the terminal side and the clamping die 2C side.

The oblique side portions 42cs1 and 42cs2 are seen to extend obliquely as shown in FIG. 13(b) when being seen from the inner side in the radial direction, but are curved in a circular arc shape along the inner wall IN and the forming die 1S when being seen from the terminal side. Actually, the widths, in the radial direction, of the guide grooves A and B are larger than the diameter of the conductive wire 3. Thus, the oblique side portions 42cs1 and 42cs2 are not formed in a perfect circular arc shape.

Meanwhile, as shown in FIG. 13(a), end portions, closest to the terminal side, of the oblique side portion forming slope 1sst and 2sst are cut out perpendicularly to the axial direction. These portions are cutouts 1skt and 2skt. When each movable component of the coil forming device 50 is located at the forming position, the cutout 1skt of the forming die 1S and the cutout 2skt of the forming die 2S communicate obliquely in the radial direction with each other from the guide groove A to the guide groove B to form a lane change groove M1 recessed in the axial direction. The lane change portion 42c1 of the terminal side coil end portion 42c is formed so as to extend through the lane change groove M1.

As described above, by moving each movable component of the coil forming device 50 from the holding position to the forming position, the terminal side coil end portion 42c is formed so as to extend along the interior of the guide groove A, the interior of the guide groove B, the oblique side portion forming slopes 1sst and 2sst, and the bottom of the lane change groove M1 of the coil forming device 50. Since a coil end portion connecting the third wire and the fourth wire is not present at the terminal side, oblique side portion forming slopes and cutouts are not present at the terminal side of the forming dies 3S and 4S.

It is possible to form a coil end portion without an oblique side portion forming slope and a cutout. However, provision of an oblique side portion forming slope and a cutout allows the terminal side coil end portion 42c to be formed into a shape close to a design value.

Next, forming the first anti-terminal side coil end portion 43a will be described.

When the inner wall IN, the forming dies 1S to 4S, the clamping dies 1C to 4C, and the outer wall OUT of the coil forming device 50 are driven so as to move from the holding position shown in FIG. 16(a) to the forming position shown in FIG. 16(b), the straight portion 61b1 of the second wire is held by the forming die 2S and the clamping die 2C, and the straight portion 61a2 of the third wire is held by the forming die 3S and the clamping die 3C, as shown in FIG. 18. Then, when the forming dies 2S and 3S and the clamping dies 2C and 3C move to the forming position, the second inner side folded-back portion 63a formed between the anti-terminal side end portion of the straight portion 61b1 and the anti-terminal side end portion of the straight portion 61a2 is gradually elongated in the circumferential direction of the coil forming device 50.

At this time, of the second inner side folded-back portion 63a, a slightly-less-than-half portion at the clamping die 2C side is located within the guide groove B at the anti-terminal side, and a slightly-less-than-half portion at the clamping die 3C side is located within the guide groove C at the anti-terminal side. An obliquely-cut oblique side portion forming slope 2ssh is provided at the corner of the forming die 2S at the anti-terminal side and the clamping die 2C side. In addition, an obliquely-cut oblique side portion forming slope 3ssh is also provided at the corner of the forming die 3S at the anti-terminal side and the clamping die 3C side.

The slightly-less-than-half portion at the clamping die 2C side of the gradually elongated second inner side folded-back portion 63a is formed into an oblique side portion 43as1 along the oblique side portion forming slope 2ssh of the forming die 2S shown in FIG. 17(c). Similarly, the slightly-less-than-half portion at the clamping die 3C side of the second inner side folded-back portion 63a is formed into an oblique side portion 43as2 along the oblique side portion forming slope 3ssh, which is formed at the corner of the forming die 3S at the anti-terminal side and the clamping die 3C side.

End portions, closest to the anti-terminal side, of the oblique side portion forming slopes 2ssh and 3ssh are cut out perpendicularly to the axial direction. These portions are cutouts 2skh and 3skh. When each movable component of the coil forming device 50 is located at the forming position, the cutout 2skh of the forming die 2S and the cutout 3skh of the forming die 3S communicate obliquely in the radial direction with each other to form a lane change groove M2 recessed in the axial direction and shown in FIG. 17(c).

The lane change portion 43a1 of the first anti-terminal side coil end portion 43a is formed so as to extend through the lane change groove M2. As described above, by moving each movable component of the coil forming device 50 from the holding position to the forming position, the first anti-terminal side coil end portion 43a is formed so as to extend along the interior of the guide groove B and the interior of the guide groove C at the anti-terminal side, the oblique side portion forming slopes 2ssh and 3ssh, and the bottom of the lane change groove M2 of the coil forming device 50.

Next, forming the second anti-terminal side coil end portion 43b at the anti-terminal side will be described. Actually, the above step of forming the first anti-terminal side coil end portion 43a and a later-described step of forming the second anti-terminal side coil end portion 43b proceed simultaneously.

When the inner wall IN, the forming dies 1S to 4S, the clamping dies 1C to 4C, and the outer wall OUT of the coil forming device 50 are driven so as to move from the holding position shown in FIG. 16(a) to the forming position shown in FIG. 16(b), the straight portion 61a1 of the first wire is held by the forming die 1S and the clamping die 1C, and the straight portion 61b2 of the fourth wire is held by the forming die 4S and the clamping die 4C.

Then, when the forming dies 1S and 4S and the clamping dies 1C and 4C move to the forming position, the second outer side folded-back portion 63b formed between the anti-terminal side end portion of the straight portion 61a1 and the anti-terminal side end portion of the straight portion 61b2 is gradually elongated in the circumferential direction of the coil forming device 50.

At this time, of the second outer side folded-back portion 63b, an about-1/3 portion at the clamping die 1C side is located within the guide groove A at the anti-terminal side, and an about-1/3 portion at the clamping die 4C side is located within the guide groove D at the anti-terminal side. The obliquely-cut oblique side portion forming slope 1ssh is provided at the corner of the forming die 1S at the anti-terminal side and the clamping die 1C side. In addition, an obliquely-cut oblique side portion forming slope 4ssh is also provided at the corner of the forming die 4S at the anti-terminal side and the clamping die 4C side.

The about-1/3 portion at the clamping die 4C side of the gradually elongated second outer side folded-back portion 63b is formed into an oblique side portion 43bs1 along the oblique side portion forming slope 4ssh of the forming die 4S shown in FIG. 17(c). Similarly, the about-1/3 portion at the clamping die 1C side of the second outer side folded-back portion 63b is formed into an oblique side portion 43bs2 along the oblique side portion forming slope 1ssh, which is formed at the corner of the forming die 1S at the anti-terminal side and the clamping die 1C side.

Anti-terminal side end portions of the oblique side portion forming slopes 1ssh and 4ssh are cut out perpendicularly to the axial direction. These portions are cutouts 1skh and 4skh. When each movable component of the coil forming device 50 is located at the forming position, the cutout 1skh of the forming die 1S and the cutout 4skh of the forming die 4S form a lane change groove M3 communicating obliquely in the radial direction with the above lane change groove M2 and shown in FIG. 17(c).

The lane change portion 43b1 of the second anti-terminal side coil end portion 43b is formed so as to extend through the lane change groove M3 and obliquely across the space above the first anti-terminal side coil end portion 43a in the axial direction. As described above, by moving each movable component of the coil forming device 50 from the holding position to the forming position, the second anti-terminal side coil end portion 43b is formed so as to extend along the interior of the guide groove A and the interior of the guide groove D at the anti-terminal side, the oblique side portion forming slopes 1ssh and 4ssh, and the bottom of the lane change groove M3 of the coil forming device 50, and obliquely in the radial direction across the space above the lane change portion 43a1 of the first anti-terminal side coil end portion 43a.

With the coil forming method according to Embodiment 1 of the present invention, the coil 4 can be formed by two steps, that is, the plane bending step (a first bending step, a second bending step) of forming the conductive wire 3, which is cut out in a straight shape, into the intermediate coil 6 on the plane, and the coil unfolding step of holding the straight portions 61a1 to 61b2 of the intermediate coil, which become slot-accommodated portions, and increasing the relative distance alternately in the opposite directions along the circumferential direction. Thus, the number of steps for producing the coil 4 can be reduced, and the productivity of the coil 4 can be improved.

Since the respective slot-accommodated portions 41a1 to 41b2, and the oblique side portion 42cs1 and the like and the lane change portion 42c1 and the like of the respective coil end portions 42c and 43 in the lap-winding coil 4 can be all formed simultaneously, the formability and the accuracy of the coil 4 can be improved.

Since the planar intermediate coil 6 is formed once and then unfolded into the coil 4 having a concentrically wound shape that is the same as the actual coil shape, the formability of the coil 4 is good. In addition, in inserting the split core 20 to the stator coil 10 obtained by assembling the plurality of coils 4, no change in the shapes of the coils 4 is caused, so that damage of the film of the conductive wire 3 can be prevented.

With the coil forming device according to Embodiment 1 of the present invention, the straight portions 61a1 to 61b2 of the intermediate coil 6 can be held from both sides in the circumferential direction by using the forming dies 1S to 4S and the clamping dies 1C to 4C and unfolded in the circumferential direction with the same curvature as the curvature at the mounting position to the stator core 2. Thus, the respective slot-accommodated portions 41a1 to 41b2 of the coil 4 can be accurately formed at one time with the same positional relationship as the mutual positional relationship established when the slot-accommodated portions 41a1 to 41b2 are accommodated in the slots 5 of the stator core 2 after formation.

The coil end portions 42c and 43 can be formed into a circular arc shape in accordance with the curvature of the stator core 2 at the position where the coil 4 is mounted to the stator core 2, and thus an accurate shape of the coil 4 can be achieved.

In the present embodiment, the respective components of the first and second groups, which form a part of the coil forming device 50, are rotated from the holding position for the intermediate coil 6 by 22.5° (corresponding to three slots) in the opposite directions. However, the two straight portions that form the slot-accommodated portions 41 may be fixed, and the two straight portions that form the other slot-accommodated portions may be rotated by 45° (corresponding to six slots). That is, the straight portions 61a1 to 61b2 of the intermediate coil 6 may be movable alternately in the opposite directions along the circumferential direction such that the relative distance therebetween increases. For example, the adjacent forming dies may be rotatable relative to each other such that the forming die 2S is seen to rotate when being seen from the forming die 1S and the forming die 1S is seen to rotate when being seen from the forming die 2S. The same applies to the clamping dies.

### Embodiment 2

Hereinafter, a coil forming device and a coil forming method according to Embodiment 2 of the present invention will be described mainly regarding the differences from Embodiment 1, with reference to the drawings.

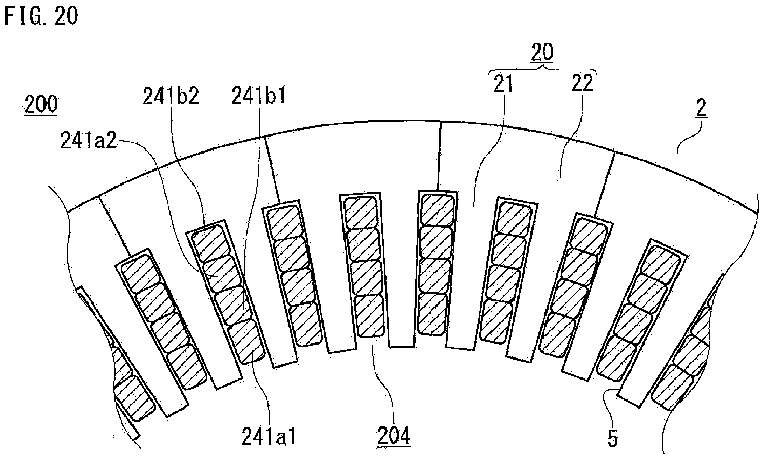

FIG. 20 is a cross-sectional view of a main part of a stator 200.

As shown in FIG. 20, each coil 204 is a coil that is formed such that cross-sections of slot-accommodated portions 241 (241a1 to 241b2) have trapezoidal shapes along the shapes of slots 5, for improving the space factor with respect to the slots 5.

Next, a method for forming the coil 204 will be described. Since the shape of the cross-section, perpendicular to the axial direction, of each slot 5 of a stator core 2 shown in FIG. 20 is a trapezoidal shape spreading toward the outer peripheral side, the cross-sections, perpendicular to the longitudinal direction, of the slot-accommodated portions 241a1 to 241b2 of the coil 204 are also formed in a trapezoidal shape. The cross-sectional shape of each slot-accommodated portion 41 is not limited to a trapezoidal shape and may be, for example, a rectangular shape.

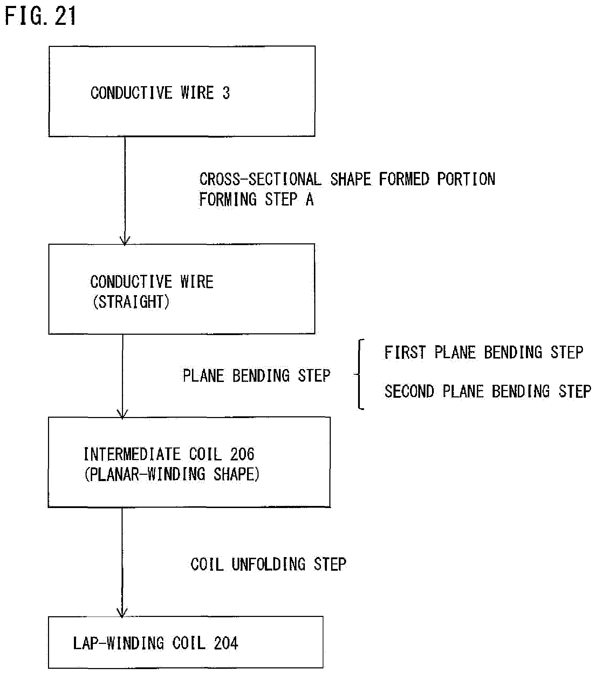

FIG. 21 is a flowchart schematically showing a process for forming the coil 204.

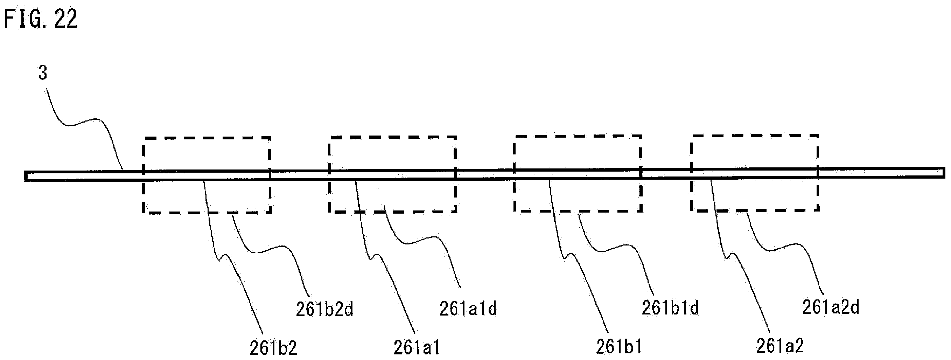

FIG. 22 is a diagram showing arrangement of cross-sectional shape formed portions of a conductive wire 3 and dies.

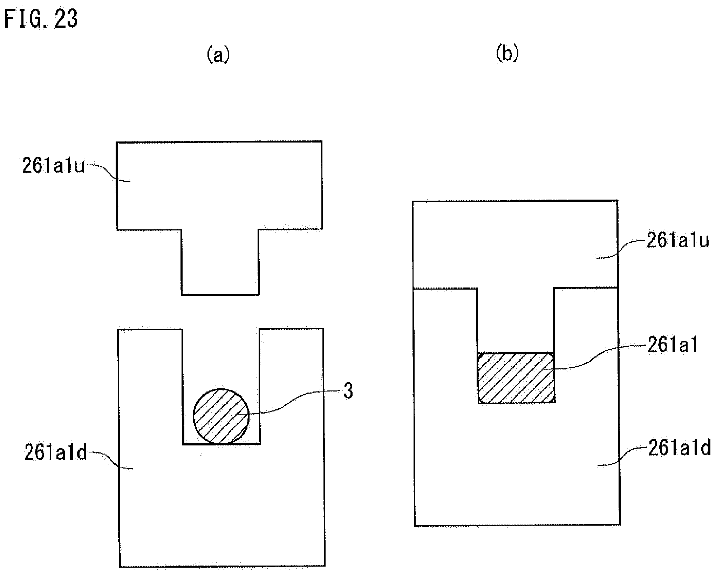

FIG. 23 is a schematic diagram showing states before and after a straight portion 261a1 of an intermediate coil 206 is formed, FIG. 23(a) shows the state before formation, and FIG. 23(b) shows the state after formation.

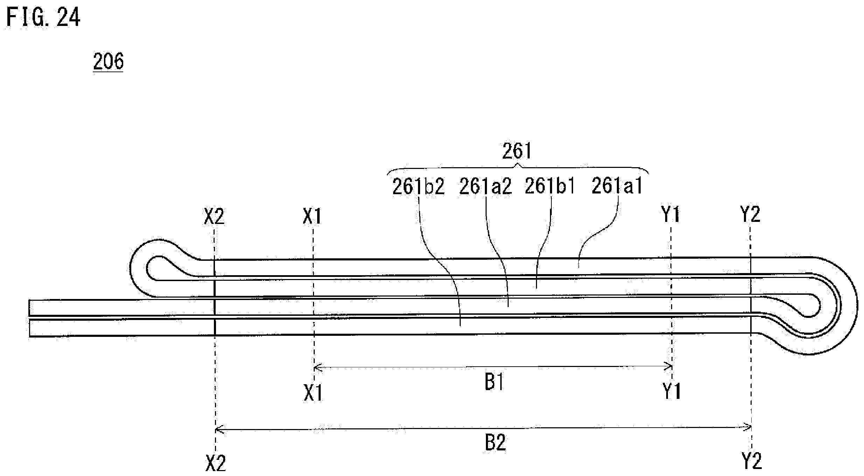

FIG. 24 is a plan view of the intermediate coil 206.

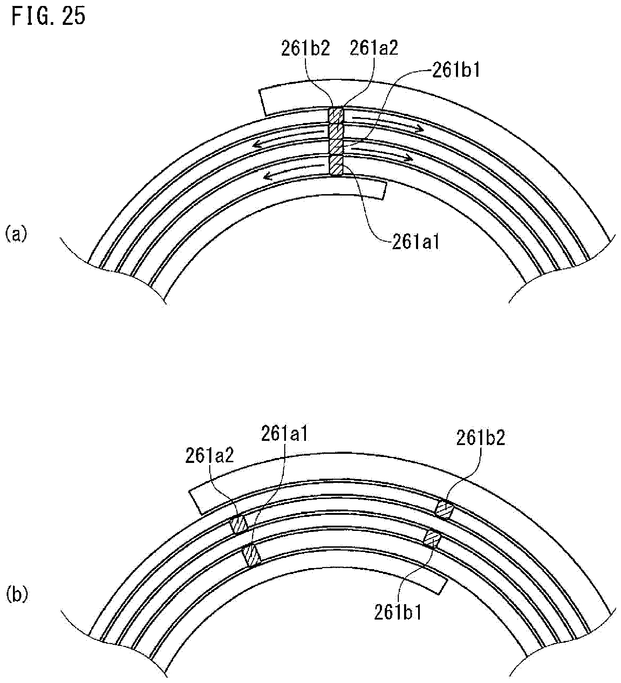

FIG. 25(a) is a cross-sectional view of a coil forming device 50 to which the intermediate coil 206 according to Embodiment 2 is mounted, taken along the direction perpendicular to the axial direction, as seen from the terminal side. FIG. 25(a) shows a state before the coil 204 is formed.

FIG. 25(b) is a cross-sectional view of the coil forming device 50 taken along the axial direction. FIG. 25(b) shows a state after the intermediate coil 206 is formed into the shape of the coil 204.

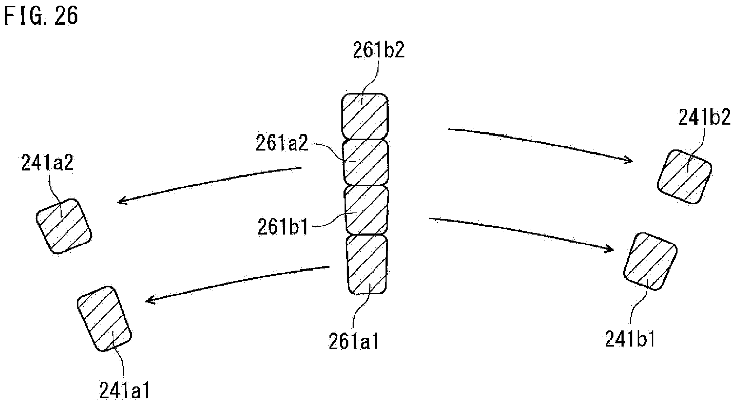

FIG. 26 is a diagram showing directions in which the straight portions 261a1 to 261b2 of the intermediate coil 206 mounted to the coil forming device 50 are unfolded into the slot-accommodated portions 241a1 to 241b2.

In the case where the shape of the cross-section, perpendicular to the longitudinal direction, of each of the slot-accommodated portions 241a1 to 241b2 is a trapezoidal shape, end portions in the circumferential direction (clamp portions) of the forming dies 1S to 4S and the clamping dies 1C to 4C for the respective first to fourth wires which end portions clamp the respective straight portions 261a1 to 261b2 of the conductive wire 3 are also formed in shapes along the shapes of the cross-sections, perpendicular to the longitudinal direction, of the straight portions 261a1 to 261b2 of the intermediate coil 206. Accordingly, the cross-sectional shape of the conductive wire 3 is not twisted while the straight portions 261a1 to 261b2 are rotated in the circumferential direction to form a coil, and the coil 204 can be formed such that the trapezoidal cross-sectional shapes are aligned so as to face to the axis of the stator core 2 even after the coil 204 is formed.

The conductive wire 3 is formed in advance such that the shapes of the cross-sections, perpendicular to the longitudinal direction, of the straight portions 261b2, 261a1, 261b1, and 261a2 at four locations of the straight conductive wire 3, which become the slot-accommodated portions 241a1 to 241b2, are along the shapes of cross-sections, perpendicular to the axial direction, of locations where the slot-accommodated portions 241a1 to 241b2 are accommodated as the coil 204 in the slots 5.

That is, since the conductive wire 3 is folded twice similarly to Embodiment 1, when the conductive wire 3 is processed in a straight state, it is necessary to form the conductive wire 3 such that the outer peripheral side and the inner peripheral side of a pair of the straight portions 261b2 and 261b1 are opposite to those of a pair of the straight portions 261a1 and 261a2.

Therefore, in order to process the cross-section, perpendicular to the longitudinal direction, of each of the straight portions 261a1 to 261b2 at four locations into a trapezoidal shape from the straight conductive wire 3, four sets such as a set of a lower die 261a1d and an upper die 261a1u shown in FIG. 23 are needed.

The conductive wire 3 in which the straight portions 261a1 to 261b2 are processed as described above is formed into the planar intermediate coil 206 in the manner described in Embodiment 1, and then the coil 204 is formed. Portions of the conductive wire 3 corresponding to the straight portions 261b2, 261a1, 261b1, and 261a2 are disposed within the lower dies 261b2d, 261a1d, 261b1d, and 261a2d corresponding to the shapes of the straight portions 261b2, 261a1, 261b1, and 261a2, and the straight portions 261a1 to 261b2 are formed by using the upper die 261a1u and the like corresponding to the respective lower dies, such that the cross-sections thereof perpendicular to the longitudinal direction have trapezoidal shapes (a cross-sectional shape formed portion forming step A).

Thereafter, the intermediate coil 206 shown in FIG. 23 is formed by executing a plane bending step similarly to Embodiment 1. The four slot-accommodated portions 241a1 to 241b2, the cross-sections of which perpendicular to the longitudinal direction are formed into trapezoidal shapes, are individually held, and the respective four slot-accommodated portions 241a1 to 241b2 are moved in predetermined rotation directions by predetermined rotation angles alternately in opposite directions, that is, in directions in which the four slot-accommodated portions 241a1 to 241b2 are spread out.

If formation of cross-sectional shapes of slot-accommodated portions is performed after a coil is formed in a lap-winding shape as in the conventional art, the coil becomes deformed and a desired final shape cannot be obtained. In addition, when a cross-sectional shape of a coil is formed after the coil is formed in a lap-winding shape, the distance between both ends of a portion that is to be subjected to crushing is increased, the length of each slot-accommodated portion is increased in the axial direction, and thus the height of the coil end portion in the axial direction is increased.

With the coil forming device 50 and the coil forming method according to Embodiment 2 of the present invention, the shapes of the cross-sections, perpendicular to the longitudinal direction, of the portions of the one conductive wire 3 that become the slot-accommodated portions 241a1 to 241b2 of the coil 204 are formed in advance, and then the coil 204 is formed.

Thus, the coil 204 can be formed in a shape close to a desired final shape, and the formability of the coil 204 is high. In addition, before the coil 204 is formed into the final shape, the cross-sectional shapes of the straight portions 261a1 to 261b2, which become the slot-accommodated portions 241a1 to 241b2, are formed. Thus, the slot-accommodated portions 241a1 to 241b2 of the coil 204 in the final shape are not elongated, and the height of the coil end portion of the coil 204 can be made low.

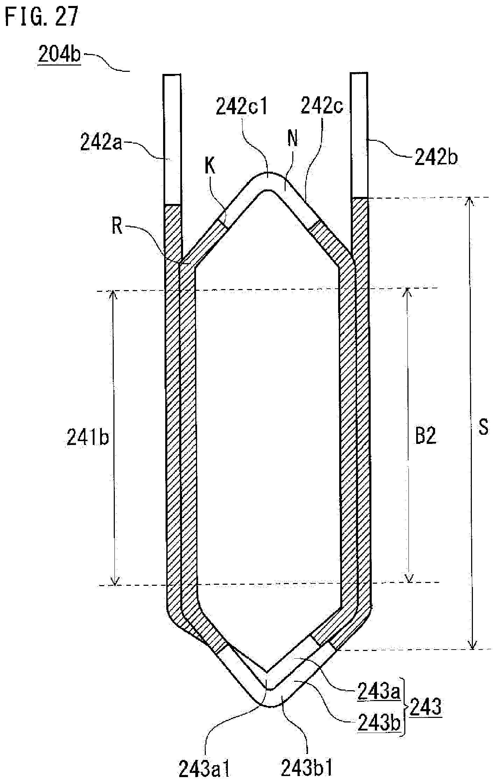

FIG. 27 is a front view of another coil 204b according to Embodiment 2 of the present invention.

Cross-sectional shape formed portions S of the conductive wire 3 which has the cross-sections perpendicular to the longitudinal direction formed into trapezoidal shapes in advance may be formed in a range longer than a range B2 of the slot-accommodated portions 241 of the coil after formation. The cross-sectional shape formed portions S of the conductive wire 3 are formed so as to be elongated to portions corresponding to parts of portions of a terminal side coil end portion 242c, a first anti-terminal side coil end portion 243a, a second anti-terminal side coil end portion 243b, a first terminal wire 242a, and the second terminal wire 242b of the coil 204b. That is, in the cross-sectional shape formed portion forming step A for the intermediate coil, the cross-sectional shape of the conductive wire 3 is formed in a range that includes the straight portions 261a1 to 261b2 and that is longer than the straight portions 261a1 to 261b2.

By so doing, even when the positions of the cross-sectional shape formed portions of the straight conductive wire 3 have been displaced in forming the intermediate coil, the coil 204b, in which the cross-sectional shape of a slot-accommodated portion 241b can be assuredly formed when the intermediate coil is formed into the coil 204b, can be produced.

The position of a boundary K between the cross-sectional shape formed portion S having a tapered shape at each coil end portion and a non-formed portion N having a circular cross-sectional shape, and the position of a circular arc portion R that is a boundary between the slot-accommodated portion 241b and the terminal side coil end portion 242c, the first anti-terminal side coil end portion 243a, and the second anti-terminal side coil end portion 243b can be displaced relative to each other. Thus, the conductive wire 3 can be bent at the boundary K, and deterioration of insulation of the conductive wire 3 can be prevented. The lengths of the cross-sectional shape formed portions S at the four locations may not be equal to each other.

### Embodiment 3

Hereinafter, a coil forming device and a coil forming method according to Embodiment 3 of the present invention will be described mainly regarding the differences from Embodiments 1 and 2, with reference to the drawings.

A coil 304 used in the present embodiment is a coil 304 in which cross-sections of slot-accommodated portions are formed in shapes along the shapes of the slots 5, for improving the space factor with respect to the slots 5, similarly to Embodiment 2. Hereinafter, a method for forming the coil 304 will be described. Here, the case with a trapezoidal cross-sectional shape similarly to Embodiment 2 will be described.

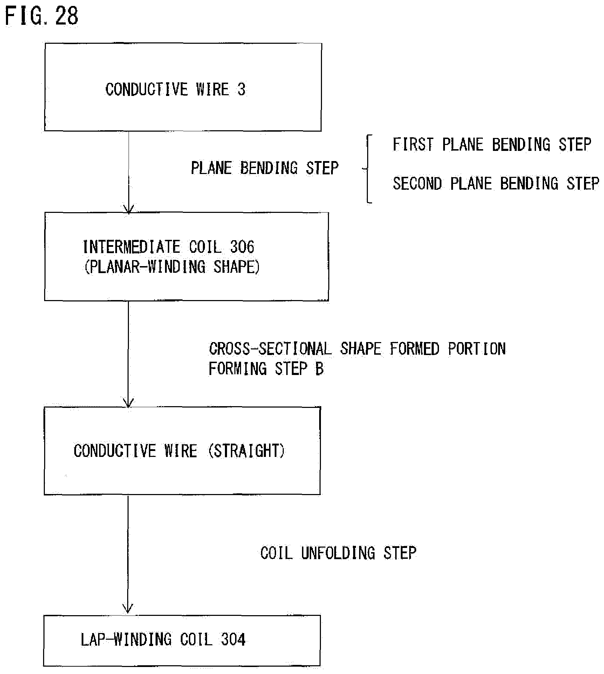

FIG. 28 is a flowchart schematically showing a process for forming the coil 304.

In the flow, first, an intermediate coil 306 having a planar winding shape is formed from a straight conductive wire 3 by the same method as in Embodiment 1, and then cross-sectional shapes of four slot-accommodated portions of the intermediate coil 306 are simultaneously formed (a cross-sectional shape formed portion forming step B), whereby the coil 304 is formed.

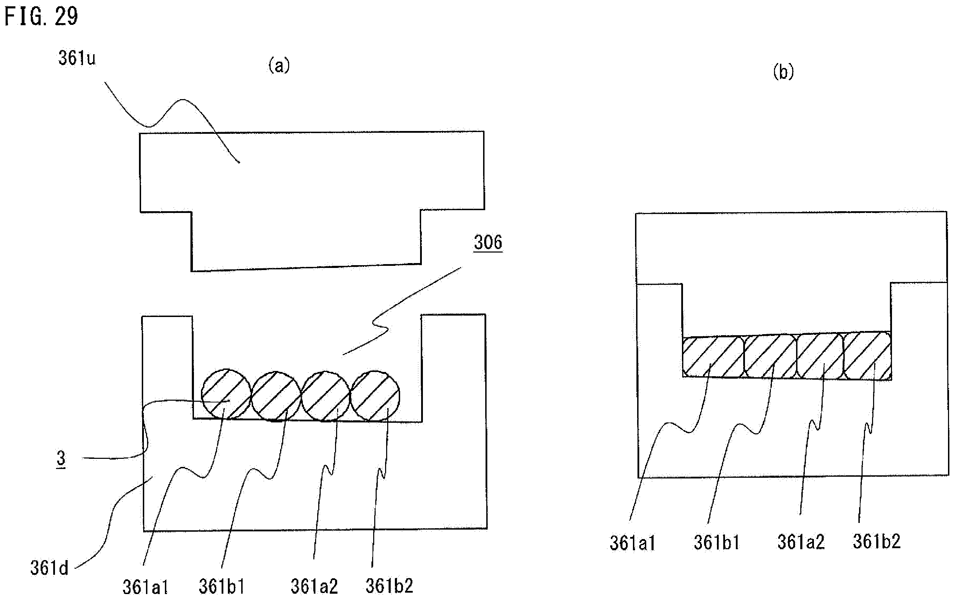

FIG. 29 is a schematic diagram showing states before and after straight portions 361a1 to 361b2 of the intermediate coil 306 are formed, FIG. 29(a) shows the state before formation, and FIG. 29(b) shows the state after formation.

As shown in FIGS. 29(a) and 29(b), the four straight portions 361a1 to 361b2 (cross-sectional shape formed portions) of the intermediate coil 306 are disposed together within a lower die 361d and are formed together by an upper die 361u. Thereafter, the coil 304 is formed by the same method as in Embodiment 2.

With the coil forming device and the coil forming method according to Embodiment 3, the same advantageous effects as those in Embodiment 2 are achieved. In addition, the number of the steps for the coil 304 can be reduced and the productivity of the coil 304 can be improved, since the cross-sectional shape formed portions at four locations can be formed at one time.

Since the shapes of the slot-accommodated portions are formed after the intermediate coil 306 is formed, displacements of the cross-sectional shape formed portions of the intermediate coil 306 are smaller and the formability thereof is better than in Embodiment 2. Moreover, in Embodiment 3 as well, by making the range of the cross-sectional shape formed portions of the conductive wire 3 longer than that of the slot-accommodated portion of the coil 304 and crushing the conductive wire 3 in a longer range, the coil 304 in which the cross-sectional shapes of the slot-accommodated portions 41 are assuredly formed can be produced similarly to Embodiment 2. In addition, deterioration of the insulation of the conductive wire 3 can be prevented. The ranges where the cross-sectional shape formed portions of the four conductive wires 3 are formed may not be the same.

### Embodiment 4

Hereinafter, a coil forming device and a coil forming method according to Embodiment 4 of the present invention will be described mainly regarding the differences from Embodiments 1 to 3, with reference to the drawings. In Embodiments 1 to 3, the coil in which the number of the slot-accommodated portions 41 is four has been described. In Embodiment 4, a coil in which the number of slot-accommodated portions is six will be described.

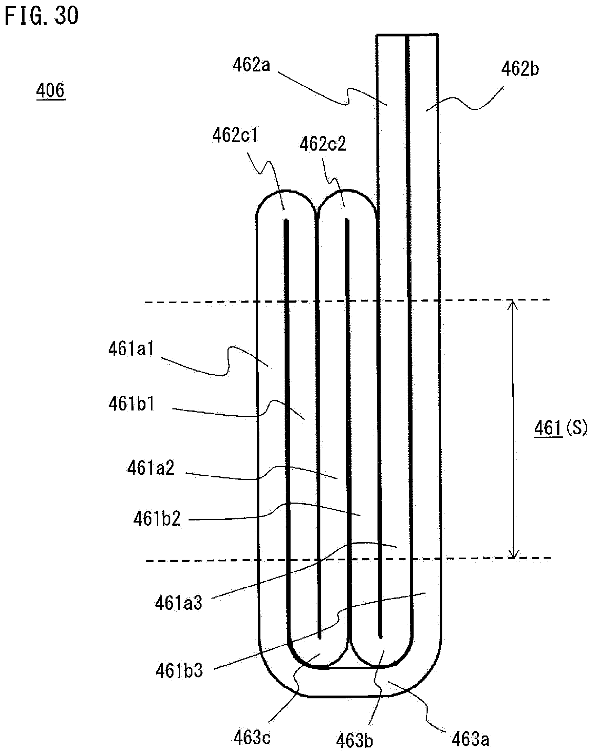

FIG. 30 is a plan view of an intermediate coil 406 for a lap-winding coil having six slot-accommodated portions.

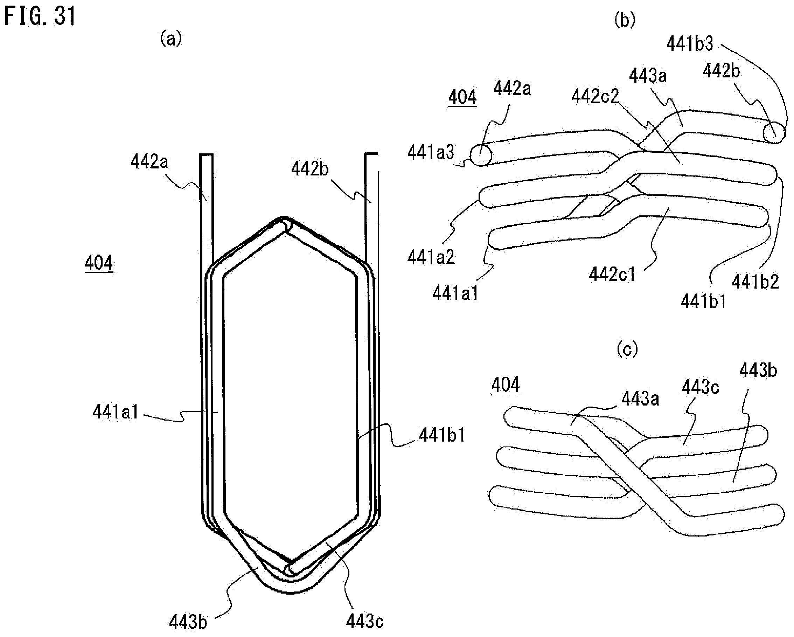

FIG. 31(a) is a front view of a coil 404 formed by unfolding the intermediate coil 406.

FIG. 31(b) is a plan view of the coil 404 as seen from the terminal side.

FIG. 31(c) is a plan view of the coil 404 as seen from the anti-terminal side.

Similarly to Embodiments 1 to 3, the coil 404 is formed by holding and unfolding respective straight portions 461a1 to 461b2 of the planar-winding-shaped intermediate coil 406 that become slot-accommodated portions, such that the distance therebetween is increased alternately in opposite directions along the circumferential direction.

In Embodiment 4, the case where the number of the slot-accommodated portions is six has been shown, but the number of the slot-accommodated portions is not limited to six. Also in the case where the number of the slot-accommodated portions is not less than four and is an even number such as eight or ten, the coil 404 can be formed by forming the planar-winding-shaped intermediate coil and then unfolding the intermediate coil.

With the coil forming device and the coil forming method according to Embodiment 4, similarly to Embodiment 1, the lap-winding coil 404 is formed by forming the planar intermediate coil 406 and then unfolding the intermediate coil 406. Thus, the coil 404 can be formed in a desired final shape, and the formability of the coil 404 is high. In addition, coil formation is possible by two steps, that is, a plane bending step performed on a plane and a coil unfolding step. Thus, the number of the manufacturing steps for the coil 404 is small, and the productivity of the coil 404 is high.

### Embodiment 5

Hereinafter, a coil forming device and a coil forming method according to Embodiment 5 of the present invention will be described mainly regarding the differences from Embodiment 1, with reference to the drawings. In Embodiment 1, the stator 100 is produced by the method in which the split cores 20 are inserted to the stator coil 10, which is a coil cage obtained by combining the plurality of lap-winding coils 4, from the outer peripheral side. In addition, the coil forming device 50 and the coil forming method for forming the coil 4 have been described in detail. In Embodiment 5, the coil forming device and the coil forming method for a lap-winding coil to be produced by different steps from those in Embodiment 1 will be described. In Embodiment 5 as well, a method for forming an intermediate coil is the same as in Embodiment 1.

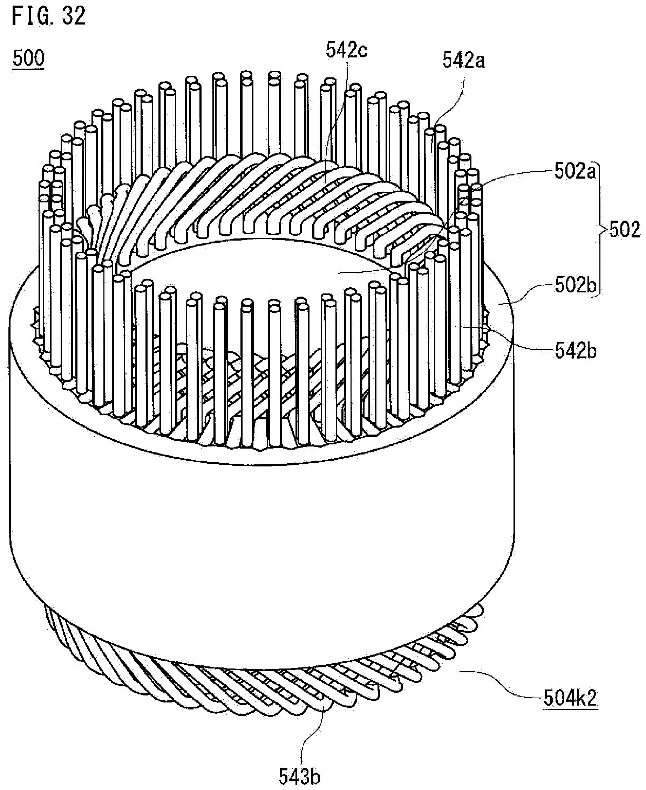

FIG. 32 is a perspective view of a stator 500 in a state where a shrunk coil cage 504k2 is mounted to a stator core 502.

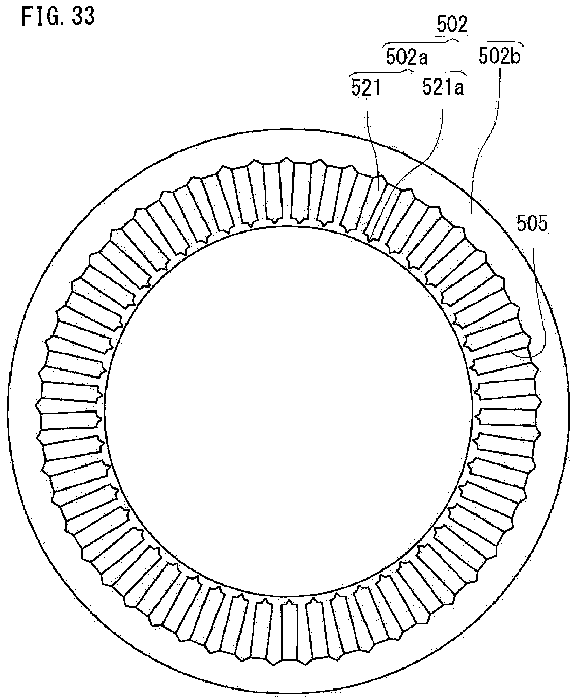

FIG. 33 is a view of the stator core 502 as seen from an axial direction thereof.

As shown in FIG. 33, the stator core 502 includes an inner core 502a and a cylindrical outer core 502b that is separate from the inner core 502a and that has an inner peripheral surface fitted to the outer peripheral surface of the inner core 502a. The inner core 502a includes a plurality of teeth 521 and a plurality of connection portions 521a.

The plurality of teeth 521 are radially arranged with regular intervals therebetween in the circumferential direction. Each connection portion 521a connects radially inner end portions of the adjacent teeth 521. Radially inner end portions of the plurality of teeth 521 and the plurality of connection portions 521a form one annular body. A space between the adjacent teeth 521 is a slot 505. The outer core 502b is a back yoke of the stator core 502.

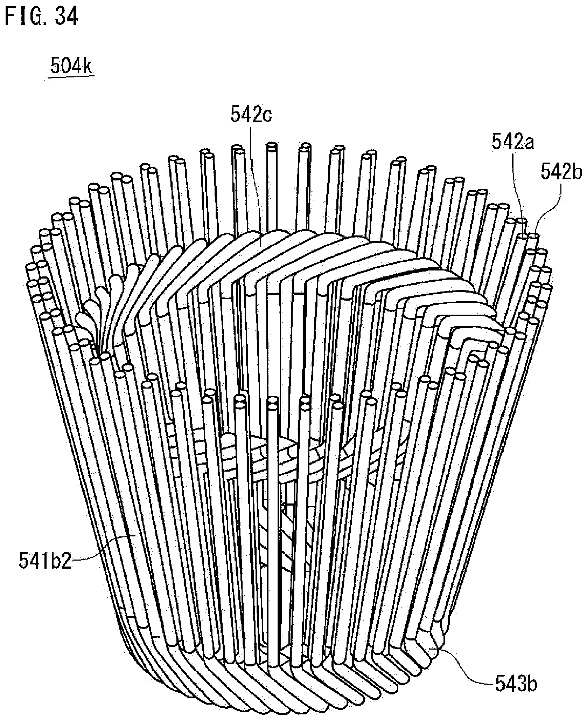

FIG. 34 is a perspective view of a coil cage 504k obtained by combining a plurality of lap-winding coils 504. As shown in FIG. 32, the coil cage 504k that is shrunk in the radial direction and put in the inner core 502a is referred to as the shrunk coil cage 504k2. In the stator 500 shown in FIG. 32, first terminal wires 542a and second terminal wires 542b have not been bent in the circumferential direction, and have not been joined by means of welding or the like.

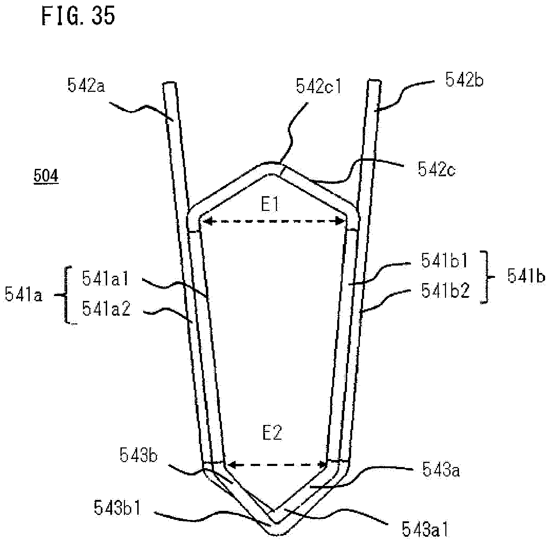

FIG. 35 is a schematic front view of the lap-winding coil 504 (hereinafter, referred to merely as the coil 504) that is one unit coil forming a part of the coil cage 504k.

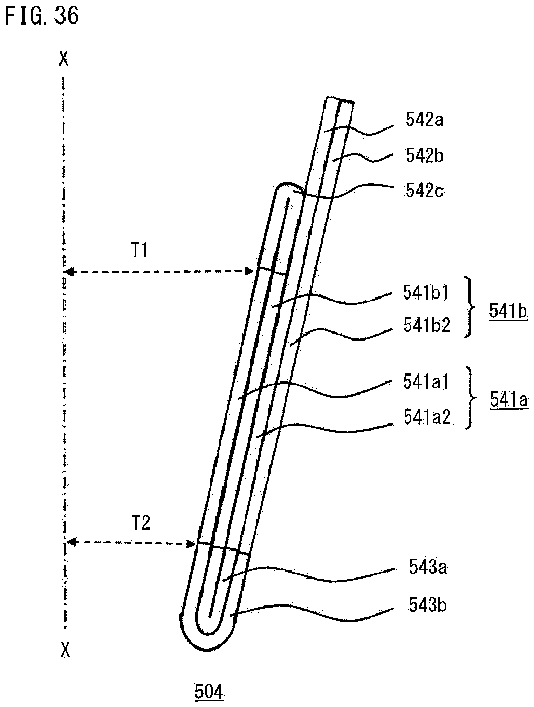

FIG. 36 is a schematic side view of the coil 504.

In Embodiment 5, the shape of the coil 504 and the shape of the coil cage 504k are different from those in Embodiment 1. However, Embodiment 5 is the same as Embodiment 1 in the number of conductive wires of slot-accommodated portions 541a1 to 541b2, the number of respective coil end portions 542c, 543a, and 543b, and a width by which the positions of lane change portions 542c1, 543a1, and 543b1 shift in the radial direction, in the coil 504, and in that the coil 504 is formed by winding one conductive wire 3.

As shown in FIG. 35, in the coil 504, a width E1, in the circumferential direction, of the terminal side coil end portion 542c is larger than a width E2, in the circumferential direction, of the first anti-terminal side coil end portion 543a and the second anti-terminal side coil end portion 543b.

Next, a method for forming the coil 504 will be described. In the present embodiment, an intermediate coil 506 that is the same as in Embodiment 1 is used.

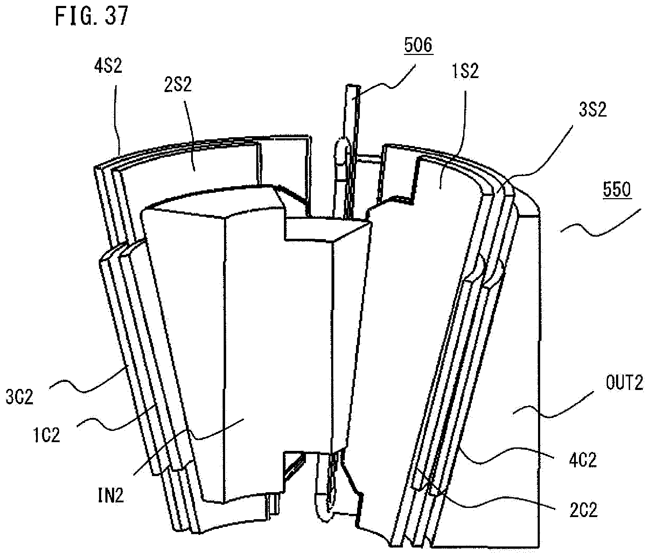

FIG. 37 is a perspective view of a coil forming device 550 in a state where the intermediate coil 506 is held.

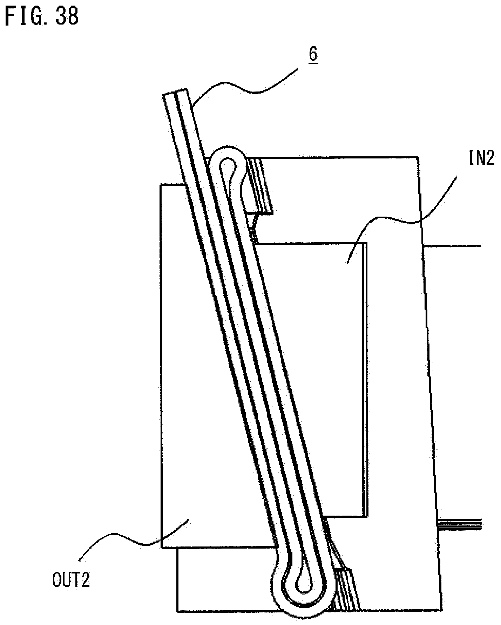

FIG. 38 is a cross-sectional view of FIG. 37 taken along the axial direction at the intermediate coil 506.

The configuration of the coil forming device 550 is basically the same as in Embodiment 1, but is different from that of the coil forming device 50 of Embodiment 1 in that an inner wall IN2, an outer wall OUT2, respective clamping dies 1C2 to 4C2, and respective forming dies 1S2 to 4S2 of the coil forming device 550 are disposed so as to be tilted relative to the central axis of the coil forming device 550.

That is, in the forming dies 1S2 to 4S2, the centers of curvature of axially end portions at the terminal side and axially end portions at the anti-terminal side are located on the central axis of the coil forming device 550, but the radii of curvature thereof are different from each other, and the radii of curvature at the anti-terminal side are smaller.

The intermediate coil 506 is disposed in the coil forming device 550 so as to be tilted by an angle equal to the tilt of the forming dies 1S2 to 4S2, and is held by the respective clamping dies 1C2 to 4C2 and the respective forming dies 1S2 to 4S2.

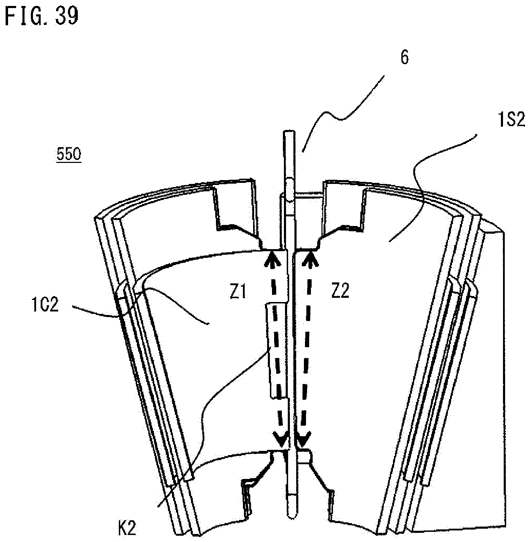

FIG. 39 is a perspective view showing a state where the inner wall IN2 of the coil forming device 550 shown in FIG. 37 is removed.

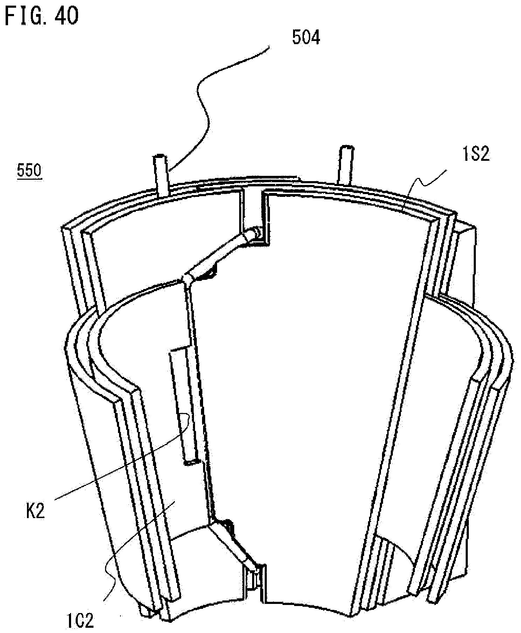

FIG. 40 is a perspective view of the coil forming device 550 after the coil 504 is formed, showing a state where the inner wall IN2 is removed.

A procedure for forming the coil 504 by using the coil forming device 550 is the same as in Embodiment 1, and the intermediate coil 506 is formed into the coil 504 by rotating the inner wall IN2, the forming dies 1S2 to 4S2, and the clamping dies 1C2 to 4C2, and the outer wall OUT2 in the circumferential direction from the state of FIG. 39 similarly to Embodiment 1.

The use of the coil forming device 550 allows the coil to be formed by the same number of steps as in Embodiment 1. Thus, the coil 504 having a complicated shape can be produced without increasing the manufacturing steps.

Next, a method for producing the stator 500 according to the present embodiment will be described.

As shown in FIG. 34, the coil cage 504k has an inner diameter larger at the terminal side than at the anti-terminal side. That is, when a central axis X shown in FIG. 36 represents the central axis of the coil cage 504k, a distance T1 between the central axis X and an end portion, at the terminal side, of the first slot-inner-side-accommodated portion 541a1 is larger than a distance T2 between the central axis X and an end portion, at the anti-terminal side, of the first slot-accommodated portion 541al. In this manner, the first slot-accommodated portion 541a and the second slot-accommodated portion 541b of each coil 504, which form a part of the coil cage 504k, are tilted relative to the central axis X.

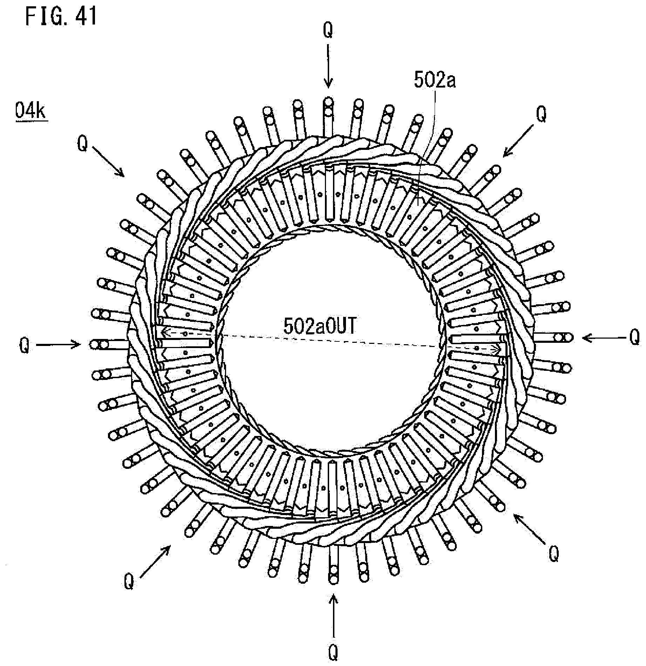

FIG. 41 is a view of a state where the inner core 502a is disposed inside the coil cage 504k, as seen from the axial direction and the terminal side.

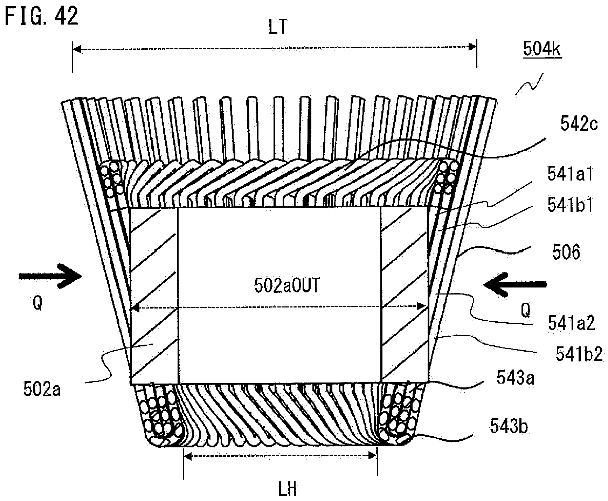

FIG. 42 is a schematic cross-sectional view showing the state where the inner core 502a is disposed inside the coil cage 504k.

As shown in FIGS. 41 and 42, an outer diameter 502aOUT of the inner core 502a is smaller than an inner diameter LT of a terminal side end portion of the coil cage 504k and larger than an inner diameter LH of an anti-terminal side end portion of the coil cage 504k.

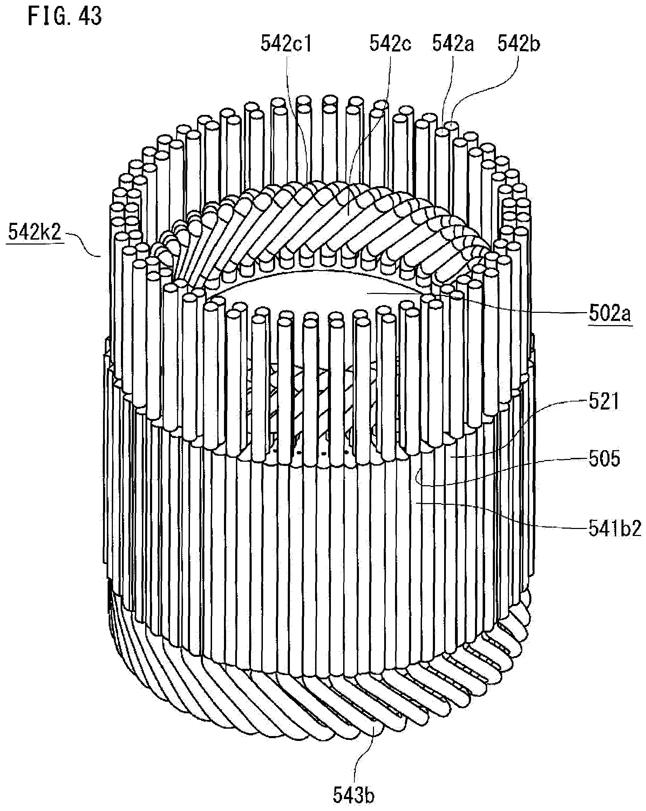

FIG. 43 is a perspective view of the inner core 502a to which the shrunk coil cage 504k2 is mounted.

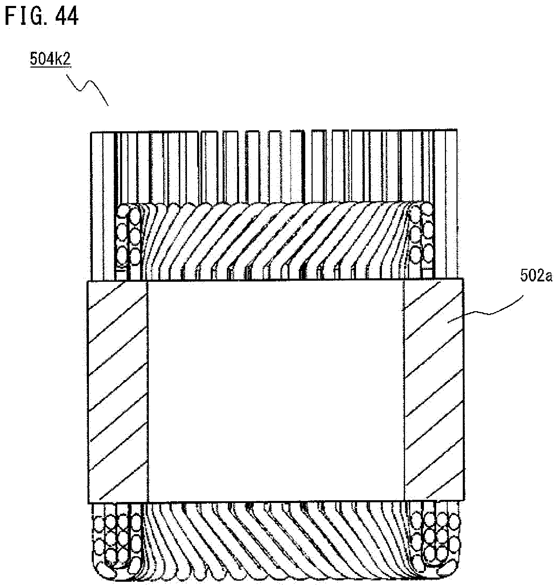

FIG. 44 is a cross-sectional view of the inner core 502a shown in FIG. 43, to which the shrunk coil cage 504k2 is mounted, taken along a plane passing through the central axis.

To mount the coil cage 504k to the inner core 502a, first, the inner core 502a is inserted in the axial direction from the terminal side of the coil cage 504k. At this time, the anti-terminal side of the slot-accommodated portions 541a1 to 541b2 of each coil 504 is obliquely inserted into the slot 505. Then, force is evenly applied from the outer peripheral side of the coil cage 504k toward the inner side as shown by arrows Q in FIGS. 41 and 42.

Accordingly, as shown in FIG. 43, the terminal side of the coil cage 504k is shrunk to the inner side in the radial direction, the slot-accommodated portions 541a1 to 541b2 of the coil cage 504k are fully accommodated within the slots 505 of the inner core 502a, and the coil cage 504k becomes the shrunk coil cage 504k2. Next, the inner peripheral surface of the outer core 502b is press-fitted to the outer peripheral surface of the inner core 502a to which the shrunk coil cage 504k2 has been mounted, whereby the stator 500 is obtained.

As shown in the clamping die 1C2 in FIG. 39, a cutout K2 may be provided in each of the clamping dies 1c2 to 4c2 in Embodiments 1 to 5. A length Z1 of a coil holding portion of each of the clamping dies 1c2 to 4c2 may not be equal to a length Z2 of a coil holding portion of each of the forming dies 1S2 to 4S2.

With the coil forming device and the coil forming method according to Embodiment 5 of the present invention, even the coil 504 having a complicated shape can be produced without increasing the manufacturing steps as compared to Embodiment 1.

By using the stator core 502 divided into the inner core 502a and the outer core 502b, the shape accuracy of the inner periphery of the stator core 502 can be good, and cogging torque and torque ripple of a rotary electric machine using the stator 500 can be reduced.

In the above coil forming method, the case where the width E1 of the terminal side coil end portion 542c of the coil 504 is larger than the width E2 of the anti-terminal side coil end portions 543a and 543b of the coil 504 has been described, but the width E1 may be smaller than the width E2.

It is noted that, within the scope of the present invention, the respective embodiments may be freely combined with each other, or each of the respective embodiments may be modified or abbreviated as appropriate.

## Claims

1. A coil forming device for unfolding a folded intermediate coil formed from one conductive wire, into a lap-winding coil capable of being mounted to two different slots of a stator core of a rotary electric machine including an annular yoke portion and a plurality of tooth portions projecting from the yoke portion to an inner side in a radial direction, wherein
the intermediate coil is folded through plane bending of the one conductive wire on a plane over an overall length thereof such that
both end portions of the conductive wire are directed in the same direction at a terminal side, four or more straight portions the number of which is an even number are arranged side by side so as to overlap each other, and the terminal side of each of the straight portions other than the two straight portions connected to both end portions of the conductive wire is connected to the terminal side of the other straight portion by a terminal side folded-back portion, and
an anti-terminal side of each of the straight portions is folded to connect to the anti-terminal side of any of the other straight portions by an anti-terminal side folded-back portion,
the coil forming device comprises
a plurality of forming dies configured to form the terminal side folded-back portion and the anti-terminal side folded-back portion as coil end portions of the lap-winding coil, an inner peripheral side and an outer peripheral side of a cross-section, perpendicular to an axial direction of the coil forming device, of each forming die having a circular arc shape, the forming dies being rotatable relative to each other about a center of curvature of an inner peripheral surface thereof as an axis of a rotation shaft,
a plurality of clamping dies each configured to hold one of the straight portions between an end surface, in a circumferential direction, of the forming die and the clamping die from both sides in the circumferential direction, an inner peripheral side and an outer peripheral side of a cross-section, perpendicular to the axial direction of the coil forming device, of each clamping die having a circular arc shape, the clamping dies being rotatable relative to each other about a center of curvature of an inner peripheral surface thereof as the axis of the rotation shaft,
a drive mechanism configured to rotationally drive the forming dies and the clamping dies, and
a driving direction change mechanism configured to change rotation directions of the forming dies and the clamping dies,
each pair of the forming die and the clamping die holding the straight portion from both sides in the circumferential direction have equal widths in the radial direction of the coil forming device, and
the forming dies and the clamping dies holding a plurality of the straight portions disposed from an inner peripheral side of the coil forming device toward an outer peripheral side of the coil forming device are disposed alternately in the circumferential direction with the straight portions interposed therebetween.

2. The coil forming device according to claim 1,
further comprising
- an inner wall provided at an inner peripheral side of the clamping die disposed closest to the inner peripheral side in the radial direction of the coil forming device, an outer peripheral side of a cross-section, perpendicular to the axial direction of the coil forming device, of the inner wall having a circular arc shape, the inner wall being rotatable about a center of curvature of an outer peripheral surface thereof as the axis of the rotation shaft, and
- an outer wall provided at an outer peripheral side of the clamping die disposed closest to the outer peripheral side in the radial direction of the coil forming device, an inner peripheral side of a cross-section, perpendicular to the axial direction of the coil forming device, of the outer wall having a circular arc shape, the outer wall being rotatable about a center of curvature of an inner peripheral surface thereof as the axis of the rotation shaft, wherein
- guide grooves configured to guide the coil end portions are formed between the inner wall and the first forming die disposed at an outer side, in the radial direction of the coil forming device, of the inner wall, between the forming die and the next forming die disposed at the outer side, in the radial direction of the coil forming device, of the forming die, and between the outer wall and the forming die disposed closest to the outer peripheral side and at an inner side, in the radial direction of the coil forming device, of the outer wall, and
- a position, in the radial direction, of an Nth guide groove from the inner side and a position, in the radial direction, of an N+1th guide groove from the inner side are different from each other by the conductive wire guided by the Nth guide groove.

3. The coil forming device according to claim 2, wherein
an obliquely-cut terminal side oblique side portion forming slope is provided at a corner of the forming die at the terminal side and at a side at which the clamping die paired with the forming die is located, and
an obliquely-cut anti-terminal side oblique side portion forming slope is provided at a corner of the forming die at the anti-terminal side and at the side at which the clamping die paired with the forming die is located.

4. The coil forming device according to claim 3,
wherein cutouts are provided in an end portion, closest to the terminal side, of the terminal side oblique side portion forming slope, and in an end portion, closest to the anti-terminal-side, of the anti-terminal side oblique side portion forming slope so as to be cut out perpendicularly to the axial direction.

5. The coil forming device according to any one of claims 1 to 4,
wherein each of the forming dies and the clamping dies has different radii of curvature at the terminal side and the anti-terminal side.

6. The coil forming device according to any one of claims 2 to 4, wherein
each of the forming dies and the clamping dies has different radii of curvature at the terminal side and the anti-terminal side, and
each of the inner wall and the outer wall has different radii of curvature at the terminal side and the anti-terminal side.

7. A coil forming method for unfolding a folded intermediate coil formed from one conductive wire, into a lap-winding coil to be mounted to two different slots of a stator core of a rotary electric machine including an annular yoke portion and a plurality of tooth portions projecting from the yoke portion to an inner side in a radial direction, wherein
in the intermediate coil, both end portions of the conductive wire are directed in the same direction at a terminal side, four or more straight portions the number of which is an even number are arranged side by side so as to overlap each other, and the terminal side of each of the straight portions other than the two straight portions connected to both end portions of the conductive wire is connected to the terminal side of the other straight portion by a terminal side folded-back portion, and
an anti-terminal side of each of the straight portions is connected to the anti-terminal side of any of the other straight portions by an anti-terminal side folded-back portion, and
the coil forming method comprises
a plane bending step of forming the intermediate coil, and
a coil unfolding step of relatively increasing a relative distance between the two adjacent straight portions of the intermediate coil in a circumferential direction when the lap-winding coil is mounted to the stator core.

8. The coil forming method according to claim 7, wherein, in the coil unfolding step, the adjacent straight portions are spread out alternately in opposite directions thereby to unfold the intermediate coil.

9. The coil forming method according to claim 7 or 8,
wherein a cross-sectional shape formed portion forming step A of forming shapes of cross-sections, perpendicular to a longitudinal direction, of the straight portions which become slot-accommodated portions to be accommodated in slots of the stator core is executed before the plane bending.

10. The coil forming method according to claim 7 or 8,
wherein a cross-sectional shape formed portion forming step B of forming, at one time, shapes of cross-sections, perpendicular to a longitudinal direction, of the straight portions which become slot-accommodated portions to be accommodated in slots of the stator core is executed on the intermediate coil after the plane bending.

11. The coil forming method according to claim 7 or 8,
wherein a cross-sectional shape formed portion forming step A of forming shapes of cross-sections, perpendicular to a longitudinal direction, of portions that include the straight portions which become slot-accommodated portions to be accommodated in slots of the stator core and that are longer than the straight portions is executed before the plane bending.

12. The coil forming method according to claim 7 or 8,
wherein a cross-sectional shape formed portion forming step B of forming, at one time, shapes of cross-sections, perpendicular to a longitudinal direction, of portions that include the straight portions which become all slot-accommodated portions to be accommodated in slots of the stator core and that are longer than the straight portions is executed on the intermediate coil after the plane bending.

13. The coil forming method according to any one of claims 9 to 12,
wherein the shapes of the cross-sections are rectangular shapes.

14. The coil forming method according to any one of claims 9 to 12,
wherein the shapes of the cross-sections are trapezoidal shapes.

15. The coil forming method according to any one of claims 7 to 14,
wherein, of the intermediate coil, the straight portion which becomes an outermost slot-accommodated portion when the intermediate coil is unfolded into the lap-winding coil, and the straight portion which becomes an innermost slot-accommodated portion when the intermediate coil is unfolded into the lap-winding coil, are connected to each other at the anti-terminal side by an anti-terminal side folded-back portion.

16. A coil forming method for unfolding a folded intermediate coil formed from one conductive wire, by using a coil forming device for unfolding the intermediate coil into a lap-winding coil capable of being mounted to two different slots of a stator core of a rotary electric machine including an annular yoke portion and a plurality of tooth portions projecting from the yoke portion to an inner side in a radial direction, wherein
the intermediate coil is folded through plane bending of the one conductive wire on a plane over an overall length thereof such that
both end portions of the conductive wire are directed in the same direction at a terminal side, four or more straight portions the number of which is an even number are arranged side by side so as to overlap each other, and the terminal side of each of the straight portions other than the two straight portions connected to both end portions of the conductive wire is connected to the terminal side of the other straight portion by a terminal side folded-back portion, and
an anti-terminal side of each of the straight portions is folded to connect to the anti-terminal side of any of the other straight portions by an anti-terminal side folded-back portion,
the coil forming device comprises
a plurality of forming dies configured to form the terminal side folded-back portion and the anti-terminal side folded-back portion as coil end portions of the lap-winding coil, an inner peripheral side and an outer peripheral side of a cross-section, perpendicular to an axial direction of the coil forming device, of each forming die having a circular arc shape, the forming dies being rotatable relative to each other about a center of curvature of an inner peripheral surface thereof as an axis of a rotation shaft,
a plurality of clamping dies each configured to hold one of the straight portions between an end surface, in a circumferential direction, of the forming die and the clamping die from both sides in the circumferential direction, an inner peripheral side and an outer peripheral side of a cross-section, perpendicular to the axial direction of the coil forming device, of each clamping die having a circular arc shape, the clamping dies being rotatable relative to each other about a center of curvature of an inner peripheral surface thereof as the axis of the rotation shaft,
a drive mechanism configured to rotationally drive the forming dies and the clamping dies, and
a driving direction change mechanism configured to change rotation directions of the forming dies and the clamping dies,
each pair of the forming die and the clamping die holding the straight portion from both sides in the circumferential direction have equal widths in the radial direction of the coil forming device,
the forming dies and the clamping dies holding a plurality of the straight portions disposed from an inner peripheral side of the coil forming device toward an outer peripheral side of the coil forming device are disposed alternately in the circumferential direction with the straight portions interposed therebetween,
the coil forming device further comprises
an inner wall provided at an inner peripheral side of the clamping die disposed closest to the inner peripheral side in the radial direction of the coil forming device, an outer peripheral side of a cross-section, perpendicular to the axial direction of the coil forming device, of the inner wall having a circular arc shape, the inner wall being rotatable about a center of curvature of an outer peripheral surface thereof as the axis of the rotation shaft, and
an outer wall provided at an outer peripheral side of the clamping die disposed closest to the outer peripheral side in the radial direction of the coil forming device, an inner peripheral side of a cross-section, perpendicular to the axial direction of the coil forming device, of the outer wall having a circular arc shape, the outer wall being rotatable about a center of curvature of an inner peripheral surface thereof as the axis of the rotation shaft,
guide grooves configured to guide the coil end portions are formed between the inner wall and the first forming die disposed at an outer side, in the radial direction of the coil forming device, of the inner wall, between the forming die and the next forming die disposed at the outer side, in the radial direction of the coil forming device, of the forming die, and between the outer wall and the forming die disposed closest to the outer peripheral side and at an inner side, in the radial direction of the coil forming device, of the outer wall,
a position, in the radial direction, of an Nth guide groove from the inner side and a position, in the radial direction, of an N+1th guide groove from the inner side are different from each other by the conductive wire guided by the Nth guide groove, an obliquely-cut terminal side oblique side portion forming slope is provided at a corner of the forming die at the terminal side and at a side at which the clamping die paired with the forming die is located,
an obliquely-cut anti-terminal side oblique side portion forming slope is provided at a corner of the forming die at the anti-terminal side and at the side at which the clamping die paired with the forming die is located,
cutouts are provided in an end portion, closest to the terminal side, of the terminal side oblique side portion forming slope, and in an end portion, closest to the anti-terminal-side, of the anti-terminal side oblique side portion forming slope so as to be cut out perpendicularly to the axial direction,
the coil forming method comprises
a plane bending step of forming the intermediate coil, and
a coil unfolding step of relatively increasing a relative distance between the two adjacent straight portions of the intermediate coil in a circumferential direction when the lap-winding coil is mounted to the stator core, and
in the coil unfolding step,
the one terminal side folded-back portion is elongated in the circumferential direction within the two guide grooves the positions of which are different from each other by the one conductive wire in the radial direction, and extends through a lane change groove formed between the cutouts of the forming dies forming the respective guide grooves, to become a lane change portion of the coil end portion at the terminal side, and
the one anti-terminal side folded-back portion is elongated in the circumferential direction within the two guide grooves at an innermost side and at an outermost side, and extends through a lane change groove formed between the cutouts of the forming dies forming the respective guide grooves, and across another coil end portion at the anti-terminal side, to become a lane change portion of the coil end portion at the anti-terminal side.

17. The coil forming method according to claim 16,
wherein the lap-winding coil in which a width of the coil end portion at the terminal side is different from a width of the coil end portion at the anti-terminal side is formed by: disposing the intermediate coil in the coil forming device so as to be tilted relative to the axial direction of the coil forming device such that a plurality of the straight portions are aligned in the radial direction; and spreading out the adjacent straight portions alternately in opposite directions thereby to unfold the intermediate coil.
